# EUROPEAN PATENT APPLICATION

(11) **EP 4 772 935 A1**
(43) Date of publication of application: **08.07.2026**
(21) Application number: 23961793.9
(22) Date of filing: 19.12.2023
(51) Int. Cl.: G02F 1/1343

(54) **ARRAY SUBSTRATE, DISPLAY PANEL, AND DISPLAY APPARATUS**

(71) Applicant: Boe Technology Group Co., Ltd., Beijing 100015 (CN); Chengdu Boe Display Sci-Tech Co., Ltd., Chengdu, Sichuan 610000 (CN)
(72) Inventor: XIAO, Feng, Beijing 100176 (CN); CHEN, Gang, Beijing 100176 (CN); YANG, Guidong, Beijing 100176 (CN); ZHU, Wei, Beijing 100176 (CN); QI, Xiaojing, Beijing 100176 (CN); GAO, Yujie, Beijing 100176 (CN); SHI, Xinping, Beijing 100176 (CN); CHEN, Yinghui, Beijing 100176 (CN); DENG, Yu, Beijing 100176 (CN)
(74) Representative: Cohausz & Florack
(86) International application number: PCT/CN2023/139855
(87) International publication number: WO 2025/129448

(57) **Abstract**

An array substrate (001), a display panel, and a display apparatus. The array substrate (001) comprises: a base substrate (100); a plurality of pixel electrodes (101) arranged in an array on the base substrate (100), wherein first gaps (GP1) extending in a first direction (X) and second gaps (GP2) extending in a second direction (Y) are provided between the pixel electrodes (101), and every two pixel electrodes (101) arranged in the first direction (X) serve as one pixel electrode group (PX); a plurality of gate lines (102) extending in the first direction (X) on the base substrate (100) and arranged in the second direction (Y), wherein orthographic projections of the gate lines (102) on the base substrate (100) at least partially overlap with orthographic projections of the first gaps (GP1) on the base substrate (100), and two gate lines (102) are included in a same first gap (GP1); and a first common electrode line (103), wherein an orthographic projection of the first common electrode line (103) on the base substrate (100) is located within the orthographic projections of the first gaps (GP1) and orthographic projections of the second gaps (GP2) between the pixel electrode groups (PX) on the base substrate (100); and where the first gap (GP1) does not overlap the second gap (GP2), the orthographic projection of the first common electrode line (103) on the base substrate (100) passes through, in the second direction (Y), an orthographic projection of a gap between the two gate lines (102) on the base substrate (100).

## Description

### Technical Field

The disclosure relates to the field of display technology, in particular to an array substrate, a display panel, and a display apparatus.

### Background

Thin Film Transistor Liquid Crystal Display (TFT-LCD), characterized by its compact size, low power consumption, high image quality, radiation-free operation, and portability, has experienced rapid development in recent years. It has gradually replaced traditional Cathode Ray Tube displays (CRT) and currently dominates the flat panel display market. At present, TFT-LCD has been widely used in various large, medium, and small-sized products, covering nearly all major electronic devices in today's information society. These applications include liquid crystal televisions, high-definition digital TVs, computers (desktop and notebook), mobile phones, tablets, navigation systems, vehicle-mounted displays, projection displays, camcorders, digital cameras, electronic watches, calculators, electronic instruments, industrial meters, public information displays, and virtual reality displays.

### Summary

Embodiments of the disclosure provide an array substrate, a display panel, and a display apparatus as follows.

In one aspect, embodiments of the disclosure provide an array substrate, including: a base substrate; a plurality of pixel electrodes arranged in an array on the base substrate, the pixel electrodes having first gaps extending along a first direction and second gaps extending along a second direction, every two pixel electrodes arranged in the first direction forming a pixel electrode group, and the second direction intersecting with the first direction; a plurality of gate lines extending along the first direction and arranged along the second direction on the base substrate, orthographic projection of the gate lines on the base substrate at least partially overlapping with orthographic projection of the first gaps on the base substrate, and two gate lines being provided in a same one first gap; and a first common electrode line, an orthographic projection of the first common electrode line on the base substrate being located in the orthographic projections of the first gaps and in orthographic projections of second gaps between pixel electrode groups on the base substrate, and in a region, not overlapping with the second gap, of the first gap, the orthographic projection of the first common electrode line on the base substrate passing through, along the second direction, an orthographic projection of a gap between two gate lines on the base substrate.

In some embodiments, in the array substrate provided in the embodiments of the disclosure, the first common electrode line includes a plurality of first common electrode sub-lines in the first gaps, and at least a part of an orthographic projection of the first common electrode sub-line on the base substrate passes through, along the second direction, the orthographic projection of the gap between the two gate lines on the base substrate.

In some embodiments, the array substrate provided in the embodiments of the disclosure, further includes a color filter layer between a layer where the plurality of gate lines are located and a layer where the plurality of pixel electrodes are located. The color filter layer includes an opening in the first gap. The first common electrode line further includes a first extension portion adjacent to the pixel electrode and connected with the first common electrode sub-line in the first gap. The first extension portion has a first boundary adjacent to the pixel electrode and extending along the first direction, and an orthotropic portion of the first boundary on the base substrate is located in an orthographic projection of the opening on the base substrate. The pixel electrode has a second boundary adjacent to the first extension portion and extending along the first direction, and an orthotropic projection of the second boundary on the base substrate is located outside the orthographic projection of the opening on the base substrate.

In some embodiments, in the array substrate provided in the embodiments of the disclosure, the opening has a fourth boundary between the first boundary and the second boundary. A distance, in the second direction, between the first boundary and the fourth boundary is greater than or equal to 4 µm, and a distance, in the second direction, between the second boundary and the fourth boundary is greater than or equal to 4 µm.

In some embodiments, the array substrate provided in the embodiments of the disclosure further includes a second common electrode line and includes a first insulating layer between a layer where the second common electrode line is located and the layer where the plurality of pixel electrodes are located. The first insulating layer includes the color filter layer. The second common electrode line includes a plurality of common electrode repetition units. The common electrode repetition unit includes a protrusion, the protrusion is electrically connected with the first extension portion through a first via running through the first insulating layer, and an orthographic projection of the first via on the base substrate is located in the orthographic projection of the opening on the base substrate.

In some embodiments, in the array substrate provided in the embodiments of the disclosure, the gate line includes a bypass portion. The bypass portion is spaced apart from the protrusion. The protrusion has a third boundary facing the bypass portion. A routing mode of the bypass portion is the same as a routing mode of the third boundary.

In some embodiments, in the array substrate provided in the embodiments of the disclosure, a part of an orthographic projection the first via on the base substrate is located in an orthotropic portion of the protrusion on the base substrate, and a remaining part of the orthotropic projection of the first via on the base substrate is located at a side of the orthographic projection of the protrusion on the base substrate facing the orthographic projection of the gate line on the base substrate.

In some embodiments, the array substrate provided in the embodiments of the disclosure, further includes a plurality of transistors and a second insulating layer between a layer where the plurality of transistors are located and the layer where the plurality of pixel electrodes are located. The second insulating layer includes the color filter layer, and the first insulating layer includes the second insulating layer. A first electrode of the transistor is electrically connected with the pixel electrode through a second via running through the second insulating layer, and an orthographic projection of the second via on the base substrate is located in the orthographic projection of the opening on the base substrate. Orthographic projections of at least some of second vias and at least some of first vias on the base substrate are located in an orthographic projection of a same opening on the base substrate.

In some embodiments, in the array substrate provided in the embodiments of the disclosure, the first electrode of the transistor includes a widened portion extending along the first direction, the widened portion is electrically connected with the pixel electrode through the second via, and an orthotropic projection of the widened portion on the base substrate is located at a side of the orthotropic projection of the two gate lines on the base substrate facing the pixel electrode on the base substrate.

In some embodiments, the array substrate provided in the embodiments of the disclosure further includes a plurality of connection electrodes. The connection electrode is integrally arranged with the pixel electrode in the first gap, the connection electrode is electrically connected with the widened portion through the second via, and an orthographic projection of the connection electrode on the base substrate overlaps at least partially with the orthotropic projection of the widened portion on the base substrate.

In some embodiments, in the array substrate provided in the embodiments of the disclosure, two connection electrodes connected with a same pixel electrode group are located in first gaps at both sides along the second direction of the same pixel electrode group, and two connection electrodes in a same first gap are alternate in the second direction.

In some embodiments, in the array substrate provided in the embodiments of the disclosure, in a first gap between two adjacent pixel electrode groups arranged in the second direction, two adjacent transistors are symmetrically arranged with respect to a center of the first gap between the two adjacent pixel electrode groups arranged in the second direction, and at least part of the transistors overlap with a region, extending along the second direction and located between two pixel electrodes in one of the pixel electrode groups, of the first gap.

In some embodiments, in the array substrate provided in the embodiments of the disclosure, a second electrode of the transistor includes a connection portion extending in the first direction, at least a part of an orthographic projection of the connection portion on the base substrate overlaps with the orthographic projection of the gap between the two gate lines on the base substrate, and a routing mode of the connection portion is the same as a routing mode of a third boundary of the protrusion facing the gate line.

In some embodiments, in the array substrate provided in the embodiments of the disclosure, the base substrate includes a plurality of red sub-pixel regions, a plurality of green sub-pixel regions and a plurality of blue sub-pixel regions, and the plurality of pixel electrodes are located in the plurality of red sub-pixel regions, the plurality of green sub-pixel regions and the plurality of blue sub-pixel regions. An orthotropic projection of a second via corresponding to a pixel electrode in the blue sub-pixel region on the base substrate and the orthotropic projection of the first via on the base substrate are located in the orthographic projection of the same opening on the base substrate.

In some embodiments, in the array substrate provided in the embodiments of the disclosure, the first common electrode sub-line includes a first portion, a second portion and a third portion connected in sequence. The first portion extends along the second direction, and an orthographic projection of the first portion on the base substrate overlaps at least partially with an orthographic projection of one of the gate lines on the base substrate. The second portion extends along the first direction, and at least a part of an orthographic projection of the second portion on the base substrate overlaps with the orthographic projection of the gap between the two gate lines on the base substrate. The third portion extends along the second direction, and an orthographic projection of the third portion on the base substrate overlaps at least partially with an orthotropic projection of another one of the gate lines on the base substrate. The orthographic projection of the first portion on the base substrate and the orthographic projection of the third portion on the base substrate are located respectively at two sides of orthographic projections of gates of the two transistors on the base substrate.

In some embodiments, in the array substrate provided in the embodiments of the disclosure, the first extension portion is connected with the third portion, and an orthographic projection of the first extension portion on the base substrate covers an orthographic projection of a part of an edge of the gate line facing the pixel electrode on the base substrate.

In some embodiments, in the array substrate provided in the embodiments of the disclosure, the first common electrode line further includes a second extension portion connected with the first portion, and an orthotropic projection of the second extension portion on the base substrate covers an orthographic projection of a part of an edge of the gate line facing the pixel electrode on the base substrate.

In some embodiments, the array substrate provided in the embodiments further includes a plurality of transistors. A first electrode of the transistor includes a widened portion extending along the first direction, the widened portion is electrically connected with the pixel electrode, and an orthotropic portion of the widened portion on the base substrate is located in the orthographic projection of the gap between the two gate lines on the base substrate. Some of orthographic projections of a part of the first common electrode sub-lines on the base substrate are located between the orthographic projections of the widened portions of the two transistors on the base substrate.

In some embodiments, the array substrate provided in the embodiments of the disclosure, further includes a plurality of connection electrodes. The connection electrode is integrally arranged with the pixel electrode, the connection electrode is electrically connected with the widened portion, and an orthographic projection of the connection electrode on the base substrate passes across an orthographic projection of one of the two gate lines on the base substrate and extends to the orthographic projection of the gap between the two gate lines on the base substrate. Orthographic projections of a remaining part of the first common electrode sub-lines on the base substrate are disconnected at the connection electrode.

In some embodiments, the array substrate provided in the embodiments further includes a third common electrode line extending along the first direction in the first gap, the third common electrode line is arranged in the same layer as the gate line, the third common electrode line is located between the two gate lines, and an orthographic projection of the third common electrode line on the base substrate overlaps with an orthographic projection of a connection position for the connection electrode and the widened portion on the base substrate.

In some embodiments, in the array substrate provided in the embodiments of the disclosure, some of the first common electrode sub-lines each include a first portion, a second portion and a third portion connected in sequence. An orthographic projection of the first portion on the base substrate overlaps at least partially with the orthographic projection of one of the gate lines on the base substrate, and the orthotropic projection of the first portion on the base substrate is parallel to a part of an orthotropic projection of one of connection electrodes on the base substrate. The second portion extends along the second direction, and an orthographic projection of the second portion on the base substrate is located between orthographic projections of widened portions of the two transistors on the base substrate. An orthographic projection of the third portion on the base substrate overlaps at least partially with an orthographic projection of another one of the gate lines on the base substrate, and the orthographic projection of the third portion on the base substrate is parallel to a part of an orthotropic projection of another one of connection electrodes on the base substrate. The orthotropic projection of the first portion on the base substrate and the orthographic projection of the third portion on the base substrate are located between the orthographic projections of two connection electrodes on the base substrate.

In some embodiments, in the array substrate provided in the embodiments of the disclosure, the first common electrode sub-line includes a fourth portion and a fifth portion. An orthographic projection of the fourth portion on the base substrate covers a part of an orthotropic projection of an edge of one of the gate lines facing the pixel electrode on the base substrate, and an orthotropic projection of the fifth portion on the base substrate covers a part of an orthotropic projection of an edge of another one of the gate lines facing the pixel electrode on the base substrate.

In some embodiments, the array substrate provided in the embodiments further includes a second common electrode line in the same layer as the plurality of gate lines. The second common electrode line includes a plurality of common electrode repetition units. The common electrode repetition unit includes a second common electrode sub-line extending in the second direction, and an orthographic projection of the second common electrode sub-line on the base substrate covers orthotropic projections of adjacent edges of two pixel electrodes in the pixel electrode group on the base substrate. A line width of the second common electrode sub-line in the first direction is greater than or equal to 7 µm and less than or equal to 15 µm.

In some embodiments, in the array substrate provided in the embodiments of the disclosure, the common electrode repetition unit further includes third common electrode sub-lines extending in the second direction. Orthotropic projection of the third common electrode sub-lines on the base substrate cover orthotropic projection of edges of the two pixel electrodes in the pixel electrode group which are away from each other on the base substrate. A size of the third common electrode sub-line in the second direction is less than or equal to a size of the second common electrode sub-line in the second direction.

In some embodiments, in the array substrate provided in the embodiments of the disclosure, at a position adjacent to the second common electrode sub-line, the gate line includes a polygonal portion protruding away from the second common electrode sub-line, or the gate line includes a straight portion extending along the first direction.

In some embodiments, in the array substrate provided in the embodiments of the disclosure, the second common electrode lines further includes a plurality of common electrode connection lines, and the plurality of common electrode connection lines are connected with adjacent common electrode repetition units arranged along the first direction.

In some embodiments, in the array substrate provided in the embodiments of the disclosure, the common electrode connection line is connected with at least one of two ends and a middle of the common electrode repetition unit in the second direction.

In some embodiments, the array substrate provided in the embodiments further includes a plurality of data lines extending in the second direction and arranged along the first direction. An orthographic projection of the data line on the base substrate is located in an orthographic projection of a second gap between adjacent pixel electrode groups on the base substrate. The first common electrode line further includes a fourth common electrode sub-line extending along the second direction, and an orthographic projection of the fourth common electrode sub-line on the base substrate at least partially covers the orthographic projection of the data line on the base substrate.

In some embodiments, in the array substrate provided in the embodiments of the disclosure, the pixel electrode is a plate-shaped electrode or a slit electrode.

In another aspect, embodiments of the disclosure provide a display panel including an array substrate and an opposing substrate, and the array substrate is the array substrate provided by the embodiments of the disclosure.

In some embodiments, in the display panel provided in the embodiments of the disclosure, the opposing substrate includes a common electrode layer.

In some embodiments, in the display panel provided in the embodiments of the disclosure, the opposing substrate further includes a black matrix. The common electrode layer is located on a side of the black matrix facing the array substrate. An orthographic projection of the black matrix on the base substrate overlaps with the orthographic projection of the first gap on the base substrate, and the orthographic projection of the black matrix on the base substrate and orthographic projections of regions, not overlapping with the first gaps, of the second gaps on the base substrate do not overlap with each other.

In another aspect, embodiments of the disclosure provide a display apparatus, including the display panel provided in the embodiments of the disclosure.

### Brief Description of Figures

FIG. 1 is a schematic diagram of a dual-gate pixel structure.
FIG. 2 is a structural schematic diagram of four pixel electrodes and wiring in the vicinity thereof in an array substrate provided in embodiments of the disclosure.
FIG. 3 is an enlarged view of a region Z1 in FIG. 2.
FIG. 4 is a structural schematic diagram of a layer where a gate line is located in FIG. 2.
FIG. 5 is a structural schematic diagram of a layer where an active layer is located in FIG. 2.
FIG. 6 is a structural schematic diagram of a layer where a first electrode and a second electrode are located in FIG. 2.
FIG. 7 is the structural schematic diagram of a first via and a second via in FIG. 2.
FIG. 8 is a structural schematic diagram of a layer where a pixel electrode is located in FIG. 2.
FIG. 9 is a cross-sectional view along a line I-II in FIG. 2.
FIG. 10 is an enlarged view of a region Z2 in FIG. 3.
FIG. 11 is a schematic diagram illustrating the climbing of both the pixel electrode and the first extension portion.
FIG. 12 is a schematic diagram of the accumulation of photoresist at the climbing position.
FIG. 13 is a structural schematic diagram of four pixel electrodes and wiring in the vicinity thereof in an array substrate provided in embodiments of the disclosure.
FIG. 14 is a structural schematic diagram of a layer where a gate line is located in FIG. 13.
FIG. 15 is a structural schematic diagram of a layer where active layer is located in FIG. 13.
FIG. 16 is a structural schematic diagram of a layer where a first electrode and a second electrode are located in FIG. 13.
FIG. 17 is a structural schematic diagram of a first via and a second via in FIG. 13.
FIG. 18 is a structural schematic diagram of a layer where a pixel electrode is located in FIG. 13.
FIG. 19 is a structural schematic diagram of a pixel electrode provided in embodiments of the disclosure.
FIG. 20 is another structural schematic diagram of a pixel electrode provided in embodiments of the disclosure.
FIG. 21 is a structural schematic diagram of four pixel electrodes and wiring in the vicinity thereof in a display panel provided in embodiments of the disclosure.
FIG. 22 is another structural schematic diagram of the four pixel electrodes and the wiring in the vicinity thereof in a display panel provided in embodiments of the disclosure.

### Detailed Description

In order to make the objects, technical solutions, and advantages of the embodiments of the disclosure clearer, the following will be described in detail with reference to the accompanying drawings. For clear illustration, the thickness of layers, films, panels, regions, etc., is enlarged in the drawings. In the disclosure, exemplary embodiments are described with reference to cross-sectional views for idealized embodiments. In this way, deviations from the shape of the drawings are expected as a result of, for example, manufacturing techniques and/or tolerances. Therefore, the embodiments described in the disclosure should not be construed as being limited to the specific shape of the region as shown in the disclosure, but rather as including deviations in the shape caused by, for example, manufacture. For example, a region that is illustrated or described as flat can typically have rough and/or non-linear features. The sharp corners shown can be round, etc. Therefore, the regions shown in the drawings are inherently indicative in nature, and their dimensions and shapes do not intend to be the exact shape of the illustrated regions and do not reflect true proportions, and are intended to illustrate the contents of the disclosure only. The same or similar signs always indicate the same or similar element or component with the same or similar function.

Unless otherwise defined, the technical or scientific terms used herein shall have the meaning normally understood by those skilled in the art to which the disclosure belongs. The words "first", "second" and similar terms in the description and the claims do not indicate any order, quantity or importance, but merely serve to distinguish the different components. Words such as "including" or "containing" mean that the element or object preceding the word includes the element or object listed after the word and its equivalents, and does not exclude other elements or objects. Similar terms such as "being connected" or "being coupled" are not limited to physical or mechanical connections, but may include electrical connections, whether direct or indirect. Words "inside", "outside", "up", "down", etc., are only used to indicate a relative positional relationship, and when the absolute position of the described object changes, the relative positional relationship may also change accordingly.

In the following description, when a component or layer is described to be "on" or "connected to" another component or layer, the component or layer may be directly on the other component or layer, directly connected to the other component or layer, or via an intermediate element or layer. When a component or layer is described to be "arranged on one side of another component or layer", the component or layer can be directly connected to the other component or layer, directly on one side of the other component or layer, or via an intermediate element or layer. However, when a component or layer is described to be "directly on" another component or layer, or "directly connected to" another component or layer, there is no intermediate component or layer. The term "and/or" includes any and all combinations of one or more related listed items. The embodiments of the disclosure may be combined with each other without conflict.

TFT liquid crystal displays include Twisted Nematic (TN) liquid crystal displays, Vertically Alignment (VA) liquid crystal displays, Fringe Field Switching (FFS) liquid crystal displays, advanced Adwanced Dimension Switch (ADS) liquid crystal displays, and In-Plane switching (IPS) type LCD display, etc. Among them, VA LCD has the advantages of better dark state performance and better contrast than other types of LCD displays.

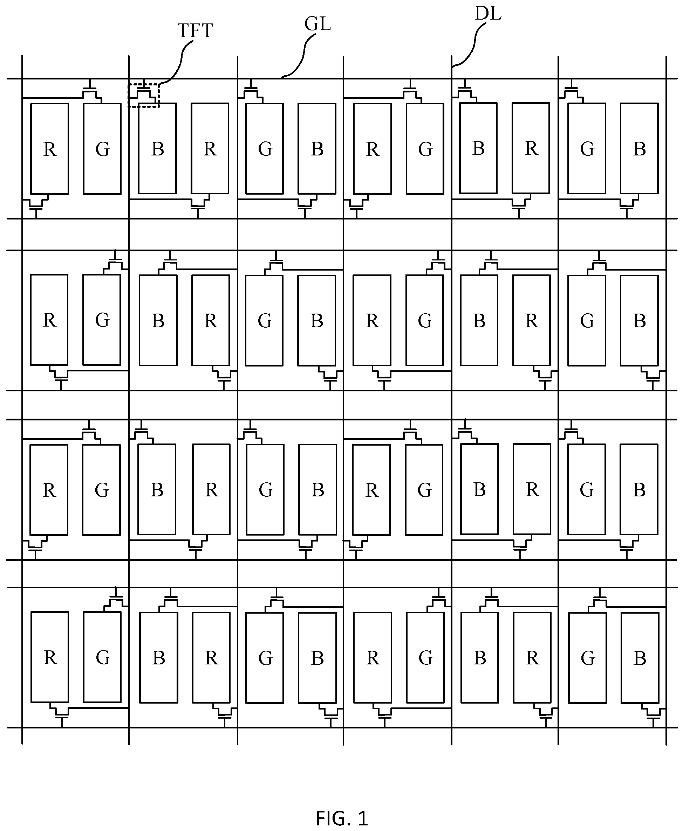

VA-type LCD displays are mostly single-gate type, that is, one gate line is connected to one row of sub-pixels, and one data line is connected to one column of sub-pixels. In order to reduce production costs, VA-type liquid crystal displays of dual gate structure have been developed. As shown in FIG. 1, in the dual-gate structure, one row of sub-pixel region (such as red sub-pixel region R, green sub-pixel region G, blue sub-pixel region B) is electrically connected with two gate lines (GL) through transistors (TFT), and two sub-pixel regions in adjacent rows and adjacent columns (such as red sub-pixel region R and green sub-pixel region G, blue sub-pixel region B and green sub-pixel region G, blue sub-pixel region B and red sub-pixel region R) are electrically connected to a same data line (DL) through transistors (TFT). In this connection mode, there are two gate lines (GL) between two adjacent rows of sub-pixel regions (e.g., red sub-pixel region R, green sub-pixel region G, blue sub-pixel region B), and one data line (DL) between every two adjacent columns of sub-pixels (e.g., both the column where the red sub-pixel region R is located and the column where the green sub-pixel region G is located, both the column where the blue sub-pixel region B is located and the column where the red sub-pixel region R is located, and both the column where the green sub-pixel region G is located and the column where the blue sub-pixel region B is located), thereby reducing the number of data lines (DL), and the total number of source ICs connected to the data line (DL). The material cost is greatly reduced, especially for medium and large-size products such as automotive displays and TVs.

Some products of VA type liquid crystal displays (such as VA curved displays) can adopt the process of Color Filter On Array (CF On Array, COA). Considering that the alignment offset between the array substrate and the opposing substrate is large in the curved surface case, the black matrix (BM) cannot be set in the direction of the data line, so it is necessary to set a transparent material (such as indium tin oxide ITO) instead of the black matrix (DATA BM Succedaneum, DBS) in the direction of the data line to cover the data line, and load the DBS ITO with the common electrode signal to prevent the data signal from affecting the liquid crystal deflection and causing light leakage. However, the DBS ITO material is very thin and has a high resistance, and the mesh structure must be formed in the actual product application, otherwise it cannot meet the light shielding requirements.

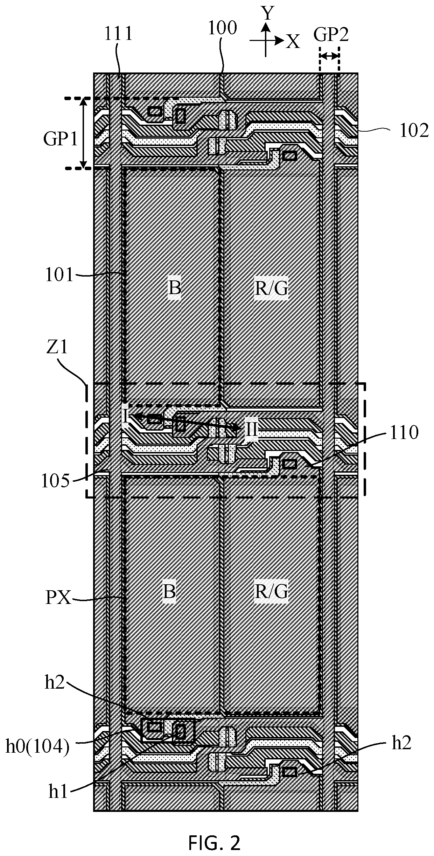

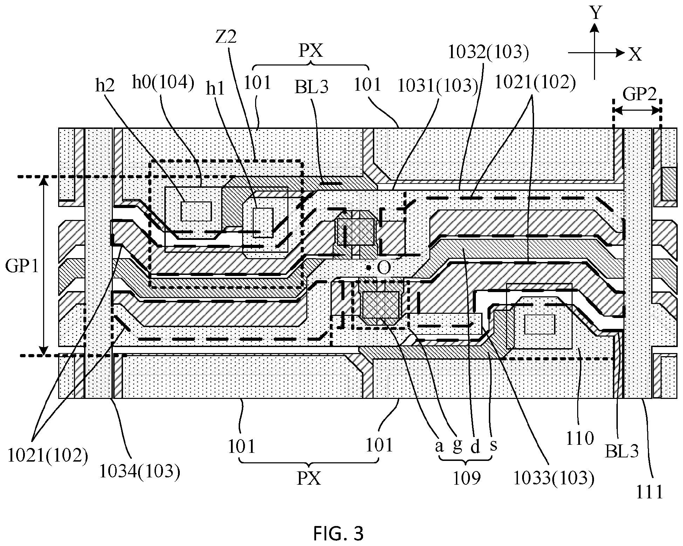

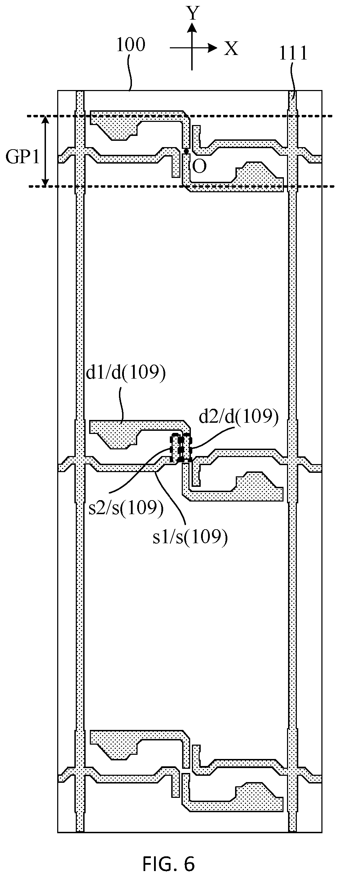

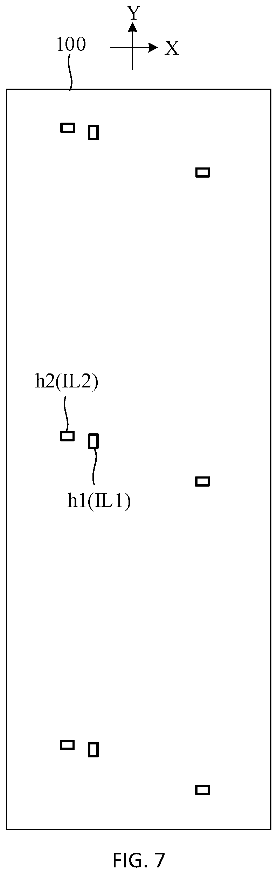

In the COA-based dual-gate pixel design, the DBS ITO mesh lines can be arranged in the gap between the sub-pixel columns between the two data lines. In view of the fact that the DBS ITO and the pixel electrode are of the same layer and the same material, in the actual process, the minimum line width of the DBS ITO is 3.5 µm, and the spacing between different signal lines in the same layer needs to be greater than or equal to 5 µm, so the minimum spacing between adjacent pixel electrodes is 13.5 µm, resulting in a large loss of aperture ratio. In order to improve the above-mentioned technical problems existing in the related art, embodiments of the disclosure provide an array substrate. FIG. 2 mainly shows four pixel electrodes 101 arranged along the first direction X and the second direction Y in the array substrate, and the wiring scheme near the four pixel electrodes 101, FIG. 3 is an enlarged view of the region Z1 in FIG. 2, and FIG. 4 to FIG. 8 are the structural schematic diagrams of respective single-film layers in FIG. 2. As shown in FIGS. 2 to 8, the array substrate provided by embodiments of the disclosure may include: a base substrate 100, a plurality of pixel electrodes 101, a plurality of gate lines 102, and a first common electrode lines 103.

In some embodiments, the base substrate 100 is a substrate that allows visible light to pass through, such as glass, quartz, plastic, and other materials.

The plurality of pixel electrodes 101 are arranged in an array on the base substrate 100, with first gaps GP1 extending along a first direction X and second gaps GP2 extending along a second direction Y between the plurality of pixel electrodes 101. Every two pixel electrodes 102 arranged along the first direction X form a pixel electrode group PX, two pixel electrodes 102 in a same pixel electrode group PX are electrically connected with a same data line 111, and the second direction Y intersects with the first direction X. Optionally, the material of the pixel electrode 101 may include at least one transparent conductive material, such as indium tin oxide (ITO), indium zinc oxide (IZO), alumina zinc oxide (AZO), gallium zinc oxide (GZO).

The plurality of gate lines 102 extend along the first direction X and are arranged along the second direction Y on the base substrate 100. An orthographic projection of the gate line 102 on the base substrate 100 overlaps at least partially with an orthographic projection of the first gap GP1 on the base substrate 100, for example, the orthographic projection of the gate line 102 on the base substrate 100 is located in the orthographic projection of the first gap GP1 on the base substrate 100. In some embodiments, two gate lines 102 are included in a same first gap GP1. Optionally, the material of the gate line 102 may include metals such as molybdenum (Mo), aluminum (Al), titanium (Ti), chromium (Cr), and nickel (Ni). The gate line 102 may be a single-layer structure or a laminated structure, for example, the gate line 102 is a single-layer structure as a metal layer of copper.

The first common electrode line 103 may be arranged in the same layer and made of the same material as the pixel electrode 101. Optionally, an orthographic projection of the first common electrode line 103 on the base substrate 100 is located in the orthographic projections of the first gaps GP1 on the base substrate 100 and in orthographic projections of second gaps GP2 between the pixel electrode groups PX on the base substrate 100. That is, the first common electrode line 103 does not exist at a second gap GP2 between the two pixel electrodes 101 in the pixel electrode group PX. In a region, not overlapping with the second gap GP2, of the first gap GP1, the orthographic projection of the first common electrode line 103 on the base substrate 100 passes through, along the second direction Y, an orthographic projection of a gap between two gate lines 102 on the base substrate 100.

In the array substrate provided in the embodiment of the disclosure, the first common electrode line 103 is arranged at the first gap GP1, and at the second gap GP2 between the pixel electrode groups PX, and in a region, not overlapping with the second gap GP2, of the first gap GP1, the first common electrode line 103 passes through the gap between two gate lines 102, so that the first common electrode line 103 forms a mesh structure that can meet the light shielding requirement in the first gap GP1 and the second gap GP2 between the pixel electrode groups PX. Since there is no first common electrode line 103 (serving as DBS ITO) at the second gap GP2 between the two pixel electrodes 101 contained in the pixel electrode group PX, the second gap GP2 between the two pixel electrodes 101 in the pixel electrode group PX can at least reduce the width of the related DBS ITO, so that the pixel aperture ratio can be greatly increased and the product transmittance can be greatly improved under the condition of satisfying the light shielding requirements.

In some embodiments, in the array substrate provided in the embodiments of the disclosure, as shown in FIG. 2 to FIG. 4 and FIG. 8, the first common electrode line 103 includes a plurality of first common electrode sub-lines 1031 located at the first gap GP1. Optionally, the first common electrode sub-line 1031 may be arranged corresponding to a range of black matrix (BM) of the opposite substrate. In addition, an orthographic projection of the first common electrode sub-line 1031 on the base substrate 100 overlaps at least partially with orthographic projections of edges, close to the pixel electrodes 101, of the two gate lines 102, so that the scanning signal of the gate lines 102 is effectively shielded by the first common voltage sub-line 1031, so that the pixel electrode 101 will no longer be interfered by the gate line 102. Continuing with reference to FIG. 2 to FIG. 4 and FIG. 8, in order to make the first common electrode sub-line 1031 continuously extended, so as to ensure that the first common electrode line 103 can form a mesh structure, in the disclosure, at least some of the orthographic projection of the first common electrode sub-line 1031 on the base substrate 100 passes through, along the second direction Y, the orthographic projection of the gap between the two gate lines 102 on the base substrate 100.

In some embodiments, the array substrates provided in the embodiments of the disclosure, as shown in FIG. 2 to FIG. 4 and FIG. 8 to FIG. 10, further includes a color filter layer 104 between the layer where the gate line 102 is located and the layer where the pixel electrode 101 is located. The color filter layer 104 includes an opening h0 located at the first gap GP1, and color filters of different colors such as red color filters, green color filters, blue color filters, etc.. Optionally, the first common electrode line 103 further includes a first extension portion 1032 in the first gap GP1, and the first extension portion 1032 is adjacent to the pixel electrode 101 and connected to the first common electrode sub-line 1031. The first extension portion 1032 has a first boundary BL1 adjacent to the pixel electrode 101 and extending along the first direction X, and an orthographic projection of the first boundary BL1 on the base substrate 100 is located in an orthographic projection of the opening h0 on the base substrate 100. In other words, the first boundary BL1 extends from the region where the opening h0 is located to the region outside the opening h0. The pixel electrode 101 has a second boundary BL2 adjacent to the first extension portion 1032 and extending along the first direction X, and an orthographic projection of the second boundary BL2 on the base substrate 100 is located outside the orthographic projection of the opening h0 on the base substrate 100.

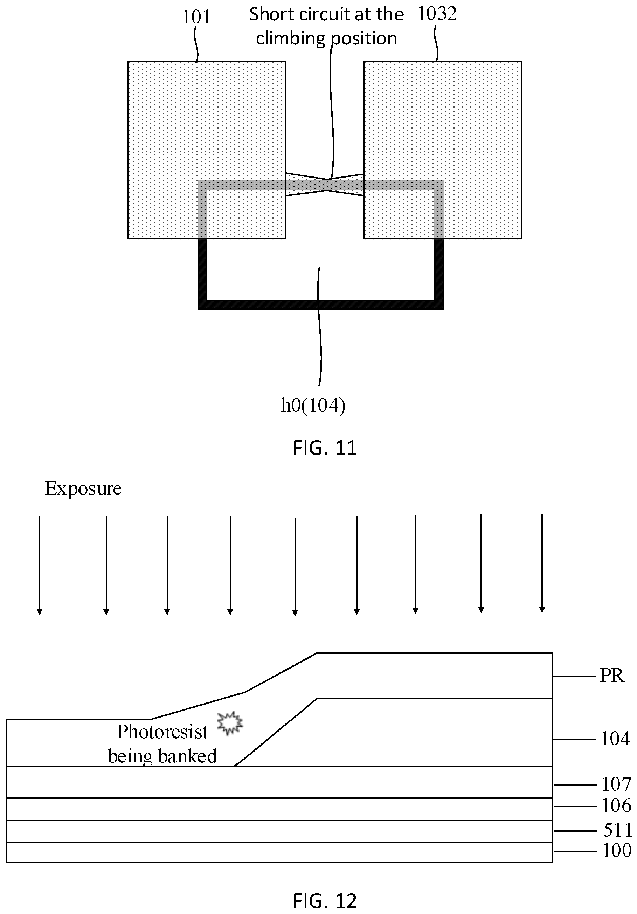

Because the first common electrode line 103 and the pixel electrode 101 are arranged in the same layer and made of the same material, and a segment difference at the boundary of the opening h0 of the color filter layer 104 is large, with an example of reaching 2.5 µm, if the first extension portion 1032 of the first common electrode line 103 and the pixel electrode 101 are both in the climbing position, the photoresist (PR) will be banked up at the climbing position and cannot be completely exposed during exposure, resulting in a short circuit (Leak) between the first extension portion 1032 and the pixel electrode 101, as shown in FIG. 11 and FIG. 12. In the disclosure, the first boundary BL1 of the first extension portion 1032 adjacent to the pixel electrode 101 extends from a region inside the opening h0 of the color filter layer 104 to a region outside the opening h0, and the second boundary BL2 of the pixel electrode 101 adjacent to the first extension portion 1032 is located outside the opening h0, so that only the first extension portion 1032 is formed at the climbing position, rather than both the first extension portion 1032 and the pixel electrode 101 being formed at the climbing position, and effectively prevents the first extension portion 1032 from being shorted with the pixel electrode 101.

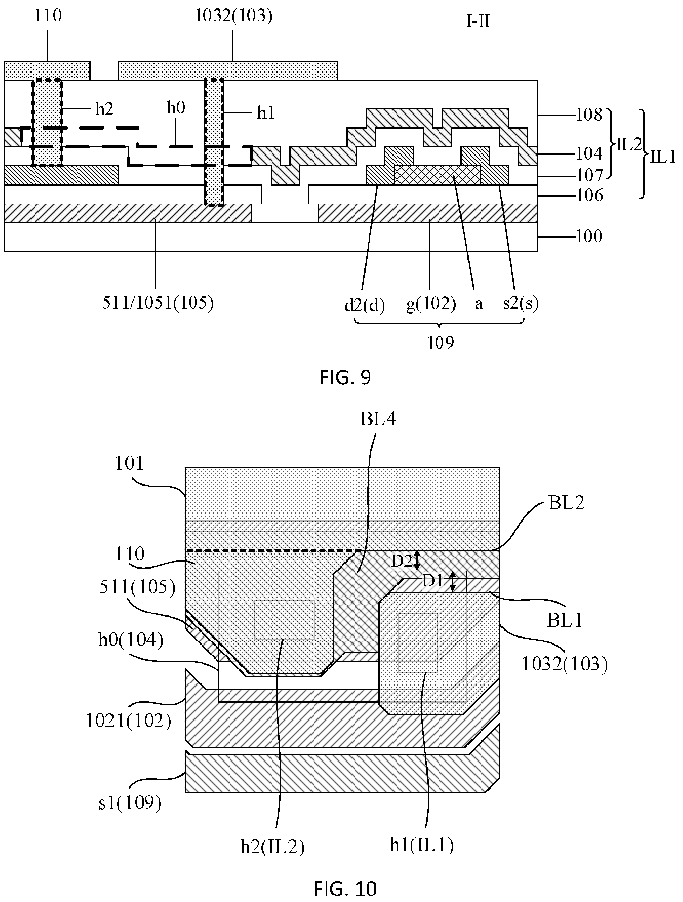

In some embodiments, as shown in FIG. 10, the opening h0 has a fourth boundary BL4 located between the first boundary BL1 and the second boundary BL2, a distance D1 between the first boundary BL1 and the fourth boundary BL4 in the second direction Y is greater than or equal to 4 µm, and a distance D2 between the second boundary BL2 and the fourth boundary BL4 in the second direction Y is greater than or equal to 4 µm, so as to prevent the first extension portion 1032 from being shorted with the pixel electrode 101 due to process fluctuations. It should be noted that 4 µm is the limit value under the current process, and with the progress of manufacturing process and equipment, the distances D1 and D2 may be less than 4 µm, for example, 3 µm.

In some embodiments, the array substrate provided in the embodiments of the disclosure, as shown in FIG. 2 to 4 and FIG. 7 to FIG. 10, further includes a second common electrode line 105 and includes a first insulating layer IL1 between the layer where the second common electrode line 105 is located and the layer where the pixel electrode 101 is located. Optionally, the second common electrode line 105 is arranged in the same layer and made of the same material as the gate line 102. The first insulating layer IL1 includes a color filter layer 104, a gate insulating layer 106, a passivation layer 107 and a planarization layer 108. The materials of the gate insulating layer 106 and the passivation layer 107 can be made of at least one of inorganic insulating material such as silicon oxide (SiOx), silicon nitride (SiNx), silicon nitride (SiON), alumina (AlOx), hafnium oxide (HfOx), tantalum oxide (TaOx), and the material of the planarization layer 108 can be at least one of organic insulating materials such as polyacrylic acid resin, polyepoxy acrylic resin, photosensitive polyimide resin, polyester acrylate, polyurethane acrylate resin , phenolic epoxy acrylic resin. The second common electrode line 105 includes a plurality of common electrode repetition units 1051. The common electrode repetition unit 1051 includes a protrusion 511, and the protrusion 511 is electrically connected with the first extension portion 1032 through the first via h1 running through the first insulating layer IL1. The orthographic projection of the first via h1 on the base substrate 100 is located in the orthographic projection of the opening h0 on the base substrate 100.

By connecting the first common electrode line 103 and the second common electrode line 105 with a first via h1, the overall resistance of the first common electrode line 103 and the second common electrode line 105 can be small, the voltage drop (IR drop) of the common voltage signal is reduced, and the uniformity and anti-interference ability of the common voltage signal are improved. For example, in the actual display process, the change of the data signal will pull the potential of the common voltage signal, and then indirectly pull the potential of the common electrode layer on the opposing substrate, resulting in crosstalk (Cross Talk). In the disclosure, the common voltage signal can be insured to be relatively stable, so there will be no crosstalk.

In some embodiments, in the array substrate provided in the embodiments of the disclosure, as shown in FIG. 2 to 4 and FIG. 7, a part of the orthographic projection of the first via h1 on the base substrate 100 is located in the orthographic projection of the protrusion 511 on the base substrate 100, and the remaining part of the orthographic projection of the first via h1 on the base substrate 100 is located on a side of the orthographic projection of the protrusion 511 on the base substrate 100 facing the orthographic projection of the gate line 102 on the base substrate 100, which can be considered as a case that in the direction perpendicular to the base substrate 100, a part of the first via h1 overlaps with the protrusion 511, and the rest of the first via h1 does not overlap with the protrusion 511. In this way, a step can be formed at the via h1 due to the presence of the protrusion 511, which is conducive to the flow of alignment liquid (such as PI liquid), improves the uniformity of PI film-forming, and improves the alignment effect. Optionally, a length of the first via h1 beyond the protrusion 511 can be greater than or equal to 2.5 µm.

In some embodiments, the array substrate provided in the embodiments of the disclosure, as shown in FIG. 2 to FIG. 9, further includes a plurality of transistors 109 and a second insulating layer IL2 between the layer where the transistor 109 is located and the layer where the pixel electrode 101 is located. Optionally, the first insulating layer IL1 includes the second insulating layer IL2, the second insulating layer IL2 includes a color filter layer 104, a passivation layer 107 and a planarization layer 108. A first electrode d of the transistor 109 is electrically connected with the pixel electrode 101 through a second via h2 running through the second insulating layer IL2, and the orthographic projection of the second via h2 on the base substrate 100 is located in the orthographic projection of the opening h0 on the base substrate 100. In some embodiments, orthographic projections of at least some of second vias h2 and at least some of first vias h1 on the base substrate 100 are located in the orthographic projection of a same opening h0 on the base substrate 100.

Since the first via h1 and the second via h2 both penetrate the planarization layer 108, each via penetrating the planarization layer 108 requires a size of the opening h0 of the color filter layer 104 to be greater than or equal to 20µm*20µm, so it has a great influence on the aperture ratio. By arranging the orthographic projections of at least some of the second vias h2 and at least some of the first vias h1 on the base substrate 100 in the orthographic projection of the same opening h0 on the base substrate 100, in the disclosure, this can be considered as sharing part of the openings h0 required by the two vias penetrating the planarization layer 108, for example, the two 20 µm * 20 µm opening h0 can be combined into one 20 µm * 30 µm opening h0, thereby reducing the overall size of all openings h0 in the entire color filter layer 104, reducing pixel aperture loss and improving transmittance.

In some embodiments, in the array substrates provided in the embodiments of the disclosure, as shown in FIG. 2 to FIG. 8, the base substrate 100 includes a plurality of red sub-pixel regions R, a plurality of green sub-pixel regions G and a plurality of blue sub-pixel regions B, and the plurality of pixel electrodes 101 are located in the plurality of red sub-pixel regions R, the plurality of green sub-pixel regions G and the plurality of blue sub-pixel regions B. The orthographic projection of the first via h1 on the base substrate 100 and an orthographic projection of a second via h2 corresponding to a pixel electrode 101 in the blue sub-pixel region B on the base substrate 100 are located in the orthographic projection of a same opening h0 on the base substrate 100.

It should be understood that the more first vias h1 used to connect the first common electrode line 103 and the second common electrode line 105, the smaller the overall resistance of the first common electrode line 103 and the second common electrode line 105, the more conducive to ensuring the stability of the common electrode signal. In order to reduce the loss of pixel aperture ratio and improve transmittance, the first via h1 and the second via h2 can be arranged to be located in the same opening h0, but this will make the opening h0 that accommodates both the first via h1 and the second via h2 larger than the opening h0 that only accommodates the first via h1 or the second via h2, and is more likely to cause the alignment film formed on the color filter layer 104 to be stacked at the opening h0 that accommodates both the first via h1 and the second via h2, which is not conducive to improving the uniformity of film formation and alignment effect of alignment film. Based on this, in order to balance the alignment effect and the stability of the common electrode signal, only the second via h2 corresponding to the pixel electrode 101 in the blue sub-pixel region B is arranged at the same opening h0 as the first via h1. Although this has a certain impact on the alignment effect of blue sub-pixel region B, in view of the fact that among the blue sub-pixel region B, the red sub-pixel region R, and green sub-pixel region G, the blue sub-pixel region B has the lowest brightness, even if part of the alignment effect of blue sub-pixel region B is sacrificed, the overall display effect of the product will not be greatly affected.

In some embodiments, in the array substrate provided in the embodiments of the disclosure, as shown in Figs. 2 to FIG. 8, the first electrodes d of the transistor 109 include widened portions d1 extending along the first direction X, the widened portions d1 are electrically connected with the pixel electrodes 101 through second vias h2, and orthographic projections of the widened portions d1 on the base substrate 1000 are located on sides of the orthographic projections of the two gate lines 102 on the base substrate 100 close to the orthographic projections of the pixel electrodes 101 on the base substrate 100.

Because a thickness of the layer where the first electrode d of the transistor 109 is located can be 4~5 times a thickness of the layer where the pixel electrode 101 is located, the risk of wire disconnection of the layer where the first electrode d of the transistor 109 is located is smaller than that of the layer where the pixel electrode 101 is located. Based on this, the first electrode d of the transistor 109 is set to include a widened portion d1 located on the side of the gate line 102 close to the pixel electrode 101, and the widened portion d1 is electrically connected with the pixel electrode 101, so that the problem of wire breakage can be effectively avoided, thereby improving the electrical connection effect between the first electrode d of the transistor 109 and the pixel electrode 101.

In some embodiments, the array substrate provided in the embodiments of the disclosure, as shown in FIG. 2, FIG. 3, FIG. 6 to FIG. 8, further includes a plurality of connection electrodes 110. The connection electrode 110 is integrally arranged with the pixel electrode 101 at the first gap GP1, the connection electrode 110 is electrically connected with the widened portion d1 through a second via h2, and an orthographic projection of the connection electrodes 110 on the base substrate 100 at least partially overlap with the orthographic projection of the widened portion d1 on the base substrate 100. Optionally, the orthographic projection of the connection electrode 110 on the base substrate 100 is located in the orthographic projection of the widened portion d1 on the base substrate 100. Because the connection electrode 110 located in the region of the widened portion d1 is a large block electrode, even if the connection electrode 110 is thinner, the connection electrode 110 is not easy to break, and can still maintain a good electrical connection effect with the widened portion d1.

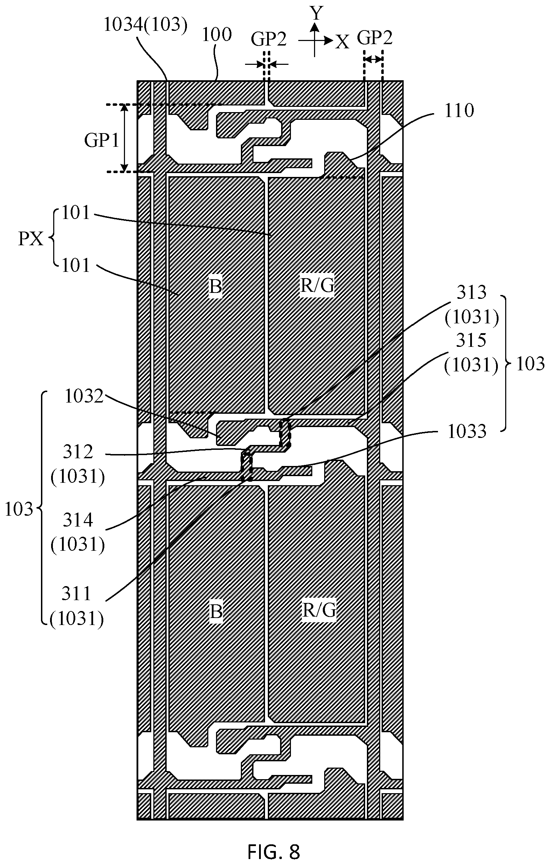

In some embodiments, in the array substrate provided in the embodiments of the disclosure, as shown in FIG. 8, the two connection electrodes 110 connected to the same pixel electrode group PX are located in two first gaps GP1 on both sides of the pixel electrode group PX along the second direction Y, and the two connection electrodes 110 in the same first gap GP1 are alternate in the second direction Y. Compared with arranging two connection electrodes 110 in the same first gap GP1 side by side along the second direction Y, in the disclosure, the two connection electrodes 110 in the same first gap GP1 are alternate on the second direction Y, so that the size of the first gap GP1 in the second direction Y can be effectively reduced, the pixel aperture ratio can be increased, and the transmittance can be improved.

In some embodiments, in the array substrate provided in the embodiments of the disclosure, as shown in FIG. 3, at least some of the transistors 109 overlap with a region, extending along the second direction Y and located between the two pixel electrodes 101 in a pixel electrode group PX, of the first gap GP1. Optionally, in the first gap GP1 between the adjacent two pixel electrode groups PX arranged in the second direction Y, two adjacent transistors 109 between two data lines 111 are symmetrically arranged with respect to a center O of the first gap GP1 between the adjacent two pixel electrode groups PX arranged in the second direction Y, to ensure that the other layers than gate g in each transistor 109 (such as the layer where the first electrode d and the second electrode s are located, and the active layer a) have about the same parasitic capacitance as the gate line 102 (for example, within the error range of ±5%), and ensure that the signal change (△Vp) caused by the parasitic capacitance of each pixel electrode 101 is similar, so as to effectively improve the shake-head stripe defects.

Specifically, as shown in FIG. 2 to FIG. 4 and FIG. 6, the first electrode d of the transistor 109 further includes a first electrode portion d2 arranged in the first gap GP1, where the first electrode portion d2 and the widened portion d1 are integrally arranged. The first electrode portion d2 extends along the second direction Y, and an orthographic projection of the first electrode portion d2 on the base substrate 100 overlaps at least partially with the orthotropic projection of the gate line 102 on the base substrate 100. For example, the orthographic projection of the first electrode portion d2 on the base substrate 100 and the orthographic projection of the gate line 102 on the base substrate 100 intersect each other. Optionally, the first electrodes d of the two transistors 109 between the two data lines 111 are symmetrically arranged with respect to the center O. Specifically, the first electrode portions d2 of the two transistors 109 between the two data lines 111 extend along a same line in the second direction Y, and are symmetrically arranged with respect to the center O. The widened portions d1 of the two transistors 109 between the two data lines 111 are symmetrically arranged with respect to the center O. This ensures that the parasitic capacitance between the gate line 102 and the first electrode d of the two transistors 109 are approximately the same (e.g., within a ±5% error range), thus improving the shake-head stripe defects.

Continuing with FIG. 2 to FIG. 4 and FIG. 6, it can be seen that the second electrode s of the transistor 109 includes a connection portion s1 extending along the first direction X and being connected to the data line 111, and a second electrode portion s2 arranged integrally with the connection portion s1 and extending along the second direction Y. At least some of an orthographic projection of the connection portion s1 on the base substrate 100 overlaps with the orthographic projection of the gap between the two gate lines 102 on the base substrate 100. For example, the orthographic projection of the connection portion s1 on the base substrate 101 is located in the orthographic projection of the gap between the two gate lines 102 on the base substrate 101. The second electrode portion s2 is arranged parallel to the first electrode portion d2 on one side facing to the data line 111 connected with the second electrode portion s2, and the orthographic projection of the second electrode portion s2 on the base substrate 100 overlaps at least partially with the orthographic projection of the gate line 102 on the base substrate 100, for example, the orthographic projection of the second electrode portion s2 on the base substrate 100 and the orthographic projection of the gate line 102 on the base substrate 100 intersect each other. Optionally, the second electrodes s of the two transistors 109 between the two data lines 111 are symmetrically arranged with respect to the center O. Specifically, the second electrode portions s2 of the two transistors 109 between the two data lines 111 are symmetrically arranged with respect to the center O, and the connection portions s1 of the two transistors 109 between the two data lines 111 are symmetrically arranged with respect to the center O. This ensures that the parasitic capacitance between the gate line 102 and the second electrodes s of the two transistors 109 are approximately the same (e.g., within a range of error of ±5%), thus improving the shake-head stripe defects.

In some embodiments, as shown in FIG. 2 to FIG. 5, an orthographic projection of the active layer a of the transistor 109 on the base substrate 100 is located in the orthographic projection of the gate line 102 on the base substrate 100, and the active layers a of the two transistors 109 between the two data lines 111 are symmetrically arranged with respect to the center O, so that the parasitic capacitance between the gate line 102 and the active layers a of the two transistors 109 are approximately the same (for example, within the error range of ±5%), thereby improving the shake-head stripe defects.

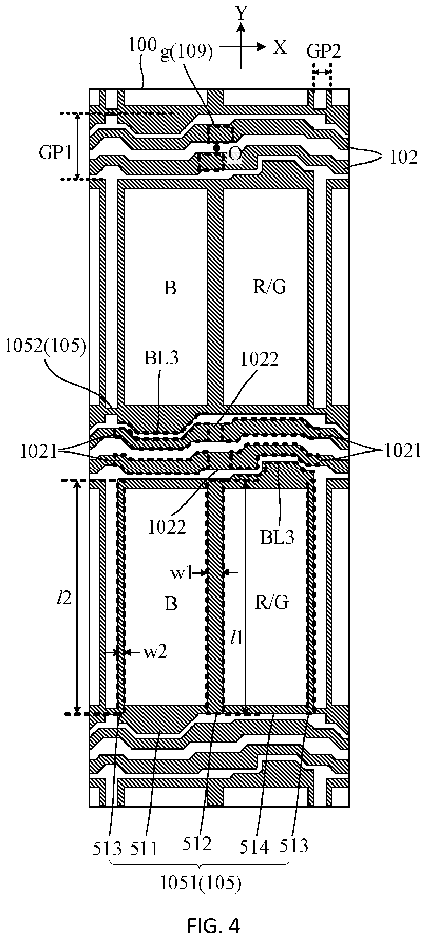

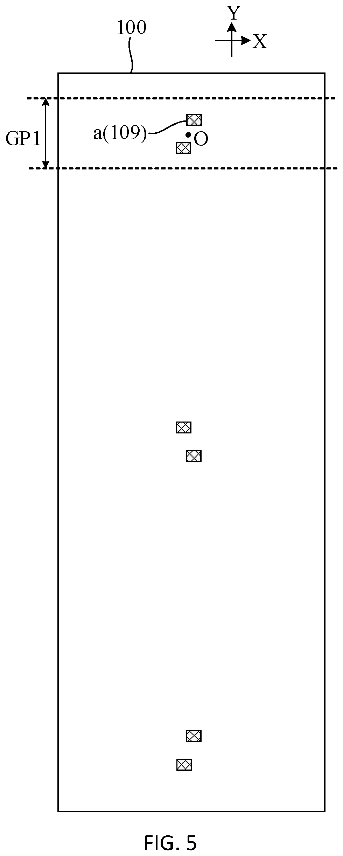

In some embodiments, in the array substrate provided in the embodiments of the disclosure, as shown in FIG. 4, the gate line 102 includes a bypass portion 1021, the bypass portion 1021 and the protrusion 511 are spaced apart, and the protrusion 511 has a third boundary BL3 at one side facing the bypass portion 1021, and the routing mode of the bypass portion 1021 is the same as that of the third boundary BL3. Optionally, in combination with FIGS. 4 and 5, it can be seen that the connection portion s1 whose orthographic projection is located at the gap between the two gate lines 102 is also routed in the same way as the third boundary BL3 of the protrusion 511. The bypass mode allows space for the second via h2 overlapping with the protrusion 511, compared with the scheme that the gate line 102 is arranged in a straight line between the two protrusions 511, the space of the first gap GP1 can be effectively utilized, and the pixel aperture ratio can be improved.

In some embodiments, in the array substrates provided in the embodiments of the disclosure, as shown in FIG. 2 to FIG. 4 and FIG. 8, in order to ensure that the first common electrode sub-line 1031 is continuously arranged in the first gap GP1, the first common electrode sub-line 1031 can be made to include a first portion 311, a second portion 312 and a third portion 313 connected in sequence. The first portion 311 extends along the second direction Y, and an orthographic projection of the first portion 311 on the base substrate 100 overlaps at least partially with the orthographic projection of one of gate lines 102 on the base substrate 100. The second portion 312 extends along the first direction X, and at least some of an orthographic projection of the second portion 312 on the base substrate 100 overlaps with the orthographic projection of the gap between the two gate lines 102 on the base substrate 100. The third portion 313 extends along the second direction Y, and the orthographic projection of the third portion 313 on the base substrate 100 overlaps at least partially with the orthographic projection of another one of gate lines 102 on the base substrate 100. The orthographic projection of the first portion 311 on the base substrate 101, and the orthographic projection of the third portion 313 on the base substrate 100 are located on two sides of the orthographic projection of the gates g of the two transistors 109 on the base substrate 100. In some embodiments, in the second direction Y, a structure consisting of the first portions 311, the second portions 312 and the third portions 313 of the two first common electrode sub-lines 1031 located on two sides of a same pixel electrode group PX can be symmetrically arranged with respect to a center of the same pixel electrode group PX.

In some embodiments, as shown in FIG. 2 to FIG. 4, FIG. 6 and FIG. 8, the orthographic projection of the second portion 312 on the base substrate 100 overlaps with the orthographic portions of the two first electrodes d2, the two second electrodes s2, and the two connection portions s1 on the base substrate 100, so that the line width of the second portion 312 in the second direction Y is relatively large, thereby effectively preventing the second part 312 from broken due to being relatively thin.

In some embodiments, as shown in FIG. 2 to 4 and FIG. 8, the first extension portion 1032 of the first common electrode line 103 is connected with the third portion 313, the first common electrode line 103 further includes a second extension portion 1033 connected with the first portion 311, the first common electrode sub-line 1031 further includes a fourth portion 314 connected with the first portion 311, and a fifth portion 315 connected with the third portion. The fourth portion 314 and the second extension portion 1033 are located on both sides of the first portion 311 in the first direction X, and the fifth portion 315 and the first extension portion 1032 are located on both sides of the third portion 313 in the first direction X. The orthographic projection of the first extension portion 1032 on the base substrate 100, and the orthographic projection of the fifth portion 315 on the base substrate 100 together cover an orthographic projection of some edge of one of gate lines 102 facing the pixel electrode 101 on the base substrate 100. The orthographic projection of the second extension portion 1033 on the base substrate 101 and the orthographic projection of the fourth portion 314 on the base substrate 100 together cover the orthographic projection of some edge of the other one of gate lines 102 facing another pixel electrode 101 on the base substrate 100. In this way, the interference of the scanning signal of the gate lines to the data signal of the pixel electrode 101 can be shielded by using all of the first extension portion 1031, the second extension portion 1032, the fourth portion 314 and the fifth portion 315.

In some embodiments, as shown in FIG. 3, FIG. 6 and FIG. 8, at the first gap GP1 between the two data lines 111, the first extension portion 1032 is located at one side of one of the connection electrodes 110 close to the first portion 311. That is, the first extension portion 1032 does not cover the edge of the gate line 102 at the side of the connection electrode 110 facing the gate line 102. The second extension portion 1033 is located at one side of the other one of connection electrodes 110 close to the third portion 313. That is, the second extension portion 1033 does not cover the edge of the gate line 102 at the side of the connection electrode 110 facing the gate line 102. If the first extension portion 1032 and the second extension portion 1033 are used to cover the edge of the gate line 102 on sides of the connection electrodes 110 facing the gate line 102, the interference of the scanning signal of the gate line 102 to the data signal of the pixel electrode 101 can be better shielded. However, because the first extension portion 1032, the second extension portion 1033 and the connection electrode 110 are arranged in the same layer, in order to avoid the first extension portion 1032, the second extension portion 1033 and the connection electrode 110 from being short-circuited, it is necessary to ensure that the spacing between the first extension portion 1032, the second extension portion 1033 and the connection electrode 110 is greater than or equal to 5 µm. Based on this, it is not conducive to reducing the width of the first gap GP1 in the second direction Y, causing a loss to the pixel aperture ratio. Whereas the fourth portion 314, the fifth portion 315, the first extension portion 1032 between the first portion 311 and the connection electrode 110, and the second extension portion 1033 between the third portion 313 and another connection electrode 110 have covered most of the edge of the gate line 102 facing the pixel electrode 101, and the interference of the scanning signal of the gate line 102 to the data signal of the pixel electrode 101 can be well shielded, therefore, in order to ensure transmittance, the first extension portion 1032, and the second extension portion 1033 are not extended to the side of the connection electrode 110 facing the gate line 102.

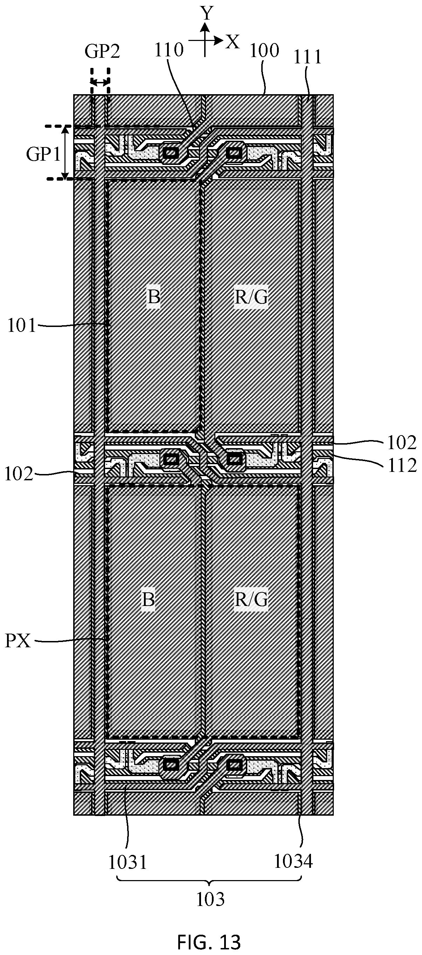

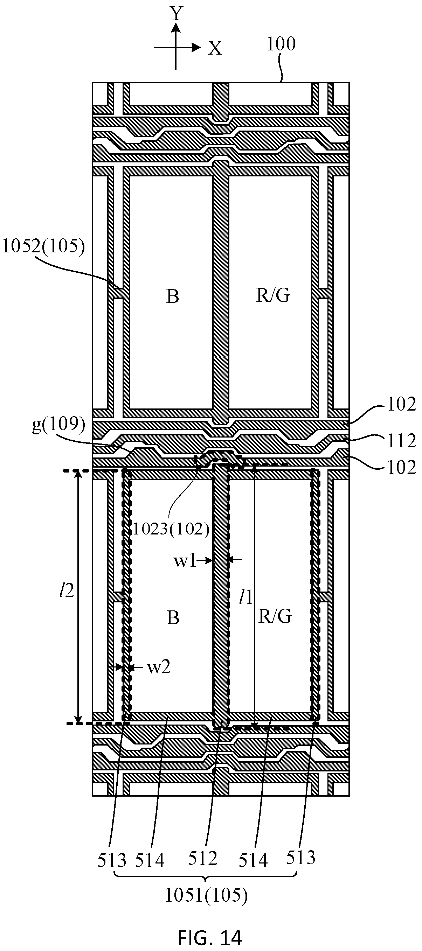

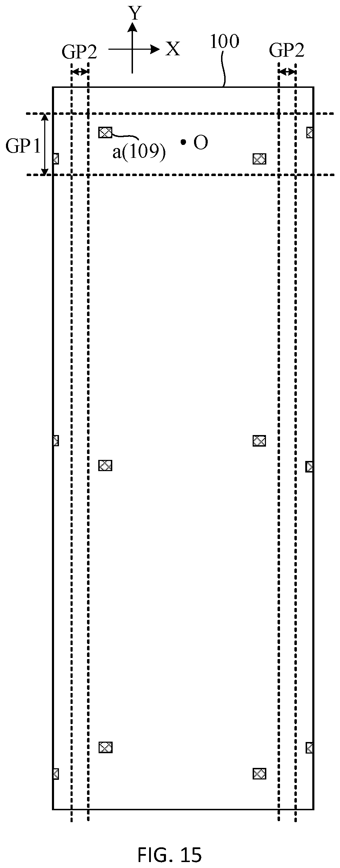

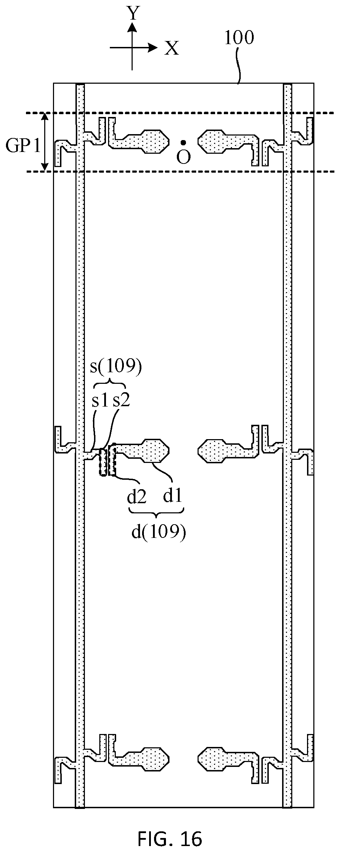

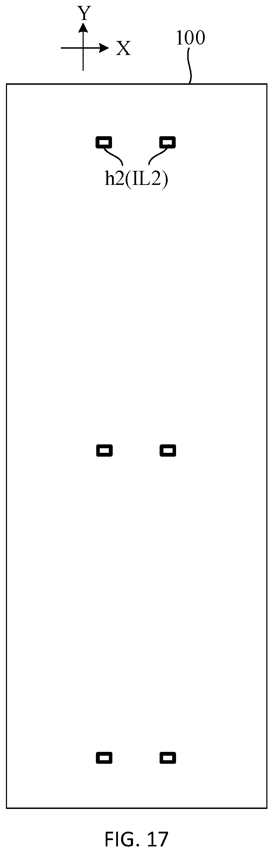

In some embodiments, FIG. 13 mainly shows four pixel electrode groups 101 arranged in an array along the first direction X and the second direction Y on the array substrate, and the wiring near the four pixels 101, and FIG. 14 to FIG. 18 are structural schematic diagrams of each single-layer in FIG. 13. As can be seen from FIG. 13 to FIG. 18, in the array substrate provided in the embodiments of the disclosure, in the first gap GP1 between the adjacent two pixel electrode groups PX arranged in the second direction Y (which is the first gap GP1 between the two second gap GP2 arranged in the first direction X), the two transistors 109 between the two data lines 111 are symmetrically arranged with respect to the center O of the first gap GP1. The orthographic projection of the widened portion d1 in the first electrode d of the transistor 109 on the base substrate 100 is located in the orthographic projection of the gap between the two gate lines 102 on the base substrate 100. The orthographic projection of the connection portion s1 in the second electrode s of the transistor 109 on the base substrate 100 is located in an orthographic projection of a gap between the gate line 102 and a third common electrode line 112 on the base substrate 100. The connection electrode 110 starts from a corner position of the pixel electrode 101 close to the center O, and the orthographic projection of the connection electrode 110 on the base substrate 100 passes through an orthographic projection of one of the gate lines 102 on the base substrate 100 and extends to the orthographic projection of the gap between the two gate lines 102 on the base substrate 100, so that the connection electrode 110 can be electrically connected with the widened portion s1 through a second via hole h2 at the gap between the two gate lines 102.

In some embodiments, continuing with FIG. 13 to FIG. 18, it can be seen that in the same first gap GP1 between two adjacent data lines 111, in order to ensure that the first common electrode sub-line 1031 is continuously arranged, some orthographic projection of some of the first common electrode sub-lines 1031 on the base substrate 100 can be located between the orthotropic projections of the widened portions d1 of the two transistors 109 on the base substrate 100. In this case, in order to avoid the first common electrode sub-line 1031 and the connection electrode 110 short-circuited, the orthographic projection of the rest of the first common electrode sub-line 1031 on the base substrate 100 can be disconnected at the orthographic projection of the connection electrode 110 on the base substrate 100.

In some embodiments, in the array substrate provided in the embodiments of the disclosure, as shown in FIG. 13, FIG. 14 and FIG. 18, in the same first gap GP1 between the adjacent two data lines 111, limited by two connection electrodes 110, the first common electrode sub-line 1031 continuously arranged may include a first portion 311, a second portion 312 and a third portion 313 that are connected in sequence. An orthographic projection of the first portion 311 on the base substrate 100 overlaps at least partially with the orthographic projection of one of the gate lines 102 on the base substrate 100, and the orthographic projection of the first portion 311 on the base substrate 100 is parallel to a part of the orthotropic projection of one of the connection electrodes 110 on the base substrate 100. The second part 312 extends along the second direction Y, and an orthographic projection of the second portion 312 on the base substrate 100 is located between the orthographic projections of the widened portions d1 of the two transistors 109 on the base substrate 100. An orthographic projection of the third portion 313 on the base substrate 100 overlaps at least partially with the orthographic projection of another one of the gate lines 102 on the base substrate 100, and the orthographic projection of the third portion 313 on the base substrate 100 is parallel to a part of the orthotropic projection of another one of connection electrodes 110 on the base substrate 100. The orthographic projection of the first portion 311 on the base substrate 100, and the orthographic projection of the third portion 313 on the base substrate 100 are located between the orthographic projections of the two connection electrodes 110 on the base substrate 100. In some embodiments, in the second direction Y, a structure consisting of the first portions 311, the second portions 312 and the third portions 313 of the two first common electrode sub-lines 1031 located on two sides of a same pixel electrode group PX may be symmetrically arranged with respect to a center of the same pixel electrode group PX.

In some embodiments, in order to effectively shield the interference of the scanning signal of the gate line 102 to the data signal of the pixel electrode 101, as shown in FIG. 13, FIG. 14 and FIG. 18, each first common electrode sub-line 1031 can be arranged to include a fourth portion 314 and a fifth portion 315. An orthotropic projection of the fourth portion 314 on the base substrate 100 covers a part of an orthotropic projection of an edge of one of the gate lines 102 facing the pixel electrode 101 on the base substrate 100, and an orthotropic projection of the fifth portion 315 on the base substrate 100 covers a part of an orthographic projection of an edge of another one of the gate lines 102 facing the pixel electrode 101 on the base substrate 100, and the fourth portion 314 and the fifth portion 315 correspond to the sub-pixels of adjacent pixel columns. Optionally, based on that the first common electrode sub-line 1031 include all of the first portion 311, the second portion 312, the third portion 313, the fourth portion 314, and the fifth portion 315, the fourth portion 314 is located on a side of the first portion 311 away from the second part 312 in the first direction X, and the fifth portion 315 is located on a side of the third portion 313 away from the second portion 312 in the first part X.

In some embodiments, in the array substrates provided in the embodiments of the disclosure, as shown in FIG. 2, FIG. 4, FIG. 8, FIG. 13, FIG. 14 and FIG. 18, in the plurality of common electrode repetition units 1051 in the second common electrode line 105 which are in the same layer as the plurality of gate lines 102, each common electrode repetition unit 1051 may be correspondingly arranged with one of pixel electrode groups PX. Optionally, the common electrode repetition unit 1051 includes a second common electrode sub-line 512 extending along the second direction Y. An orthographic projection of the second common electrode sub-line 512 on the base substrate 101 covers orthographic projections of adjacent edges of the two pixel electrodes 101 in the pixel electrode group PX on the base substrate 100. Since in the disclosure, DBS ITO is not set between the two pixel electrodes 101 of the pixel electrode group PX, the second gap GP2 between the two pixel electrodes 101 can be reduced. In order to improve the pixel aperture ratio while ensuring that the second common electrode sub-line 512 and the two pixel electrodes 101 form a storage capacitance, the line width w1 of the second common electrode sub-line 512 in the first direction X can be set to be greater than or equal to 7 µm and less than or equal to 15 µm, for example, 10 µm.

In some embodiments, continuing with FIG. 2, FIG. 4, FIG. 8, FIG. 13, FIG. 14 and FIG. 18, it can be seen that the common electrode repetition unit 1051 may also include third common electrode sub-lines 513 extending along the second direction Y, and orthographic projections of the third common electrode sub-lines 513 on the base substrate 100 covers orthographic projections of edges, of the two pixel electrodes 101 in the pixel electrode group PX, which are away from each other on the base substrate 100, A length l2 of the third common electrode sub-line 513 in the second direction Y is less than or equal to a length l1 of the second common electrode sub-line 512 in the second direction Y. In some examples, as shown in FIG. 4, the length l2 of the third common electrode sub-line 513 in the second direction Y is equal to the length l1 of the second common electrode sub-line 512 in the second direction Y. As shown in FIG 14, the length l2 of the third common electrode sub-line 513 in the second direction Y is smaller than that of the second common electrode sub-line 512 in the second direction Y.

As can be seen from FIG. 4, at the position adjacent to the second common electrode sub-line 512, the gate line 102 includes a straight line 1022 extending along the first direction X, and the wiring mode is relatively simple. As can be seen from FIG. 14, at a position adjacent to the second common electrode sub-line 512, in order to make space for the second common electrode sub-line 512, the gate line 102 includes a polygonal portion 1023 protruding away from the second common electrode sub-line 512. In the solution in which a DBS ITO is arranged between the two pixel electrodes 101 of the pixel electrode group PX, in order to achieve a better light shielding effect, the length l2 of the third common electrode sub-line 513 in the second direction Y is smaller than that of the second common electrode sub-line 512 in the second direction Y. In the disclosure, the DBS ITO between the two pixel electrodes 101 of the pixel electrode group PX is removed, however, the length l2 of the third common electrode sub-line 513 in the second direction Y can still be kept smaller than the length l1 of the second common electrode sub-line 512 in the second direction Y, so that the mask of the layer where the second common electrode line 105 is located (i.e., the layer where the gate line 102 is located) can be used to reduce the cost.

In addition, it should be noted that, the second common electrode sub-lines 512 overlaps with the edges of the two pixel electrodes 101 and the second gap GP2 between the two pixel electrodes 101 in the direction perpendicular to the base substrate 100, and the third common electrode sub-line 513 overlaps with the edge of one pixel electrode 101 in the direction perpendicular to the base substrate 100, therefore, the size w1 of the second common electrode sub-line 512 in the first direction X is greater than that of the third common electrode sub-line 513 in the second direction X.

In some embodiments, as shown in FIG. 2, FIG. 4, FIG. 8, FIG. 13, FIG. 14 and FIG. 18, in order to increase the storage capacitance between the second common electrode line 105 and the pixel electrode 101, the common electrode repetition unit 1051 of the second common electrode line 105 can be arranged to further include a common electrode connection sub-line 514 extending along the first direction X, and the common electrode connection sub-line 514 is connected between the end of the second common electrode line 512 and the end of the third common electrode sub-line 513 at a same one of sides. The common electrode connection sub-line 514 and an edge extending in the first direction X of the pixel electrode 101 overlap each other in the direction perpendicular to the base substrate 100. Optionally, in FIG. 4, for a region where a same pixel electrode 101 is located, the common electrode connection sub-line 514 and the protrusion 511 are opposite to each other in the first direction X, that is, the protrusion 511 is connected between the end of the second common electrode sub-line 512 and the third common electrode sub-line 513 at the other same one of sides; in FIG. 14, the common electrode connection sub-line 514 is connected between the end of the second common electrode sub-line 512 and the end of the third common electrode sub-line 513 at the same one of sides.

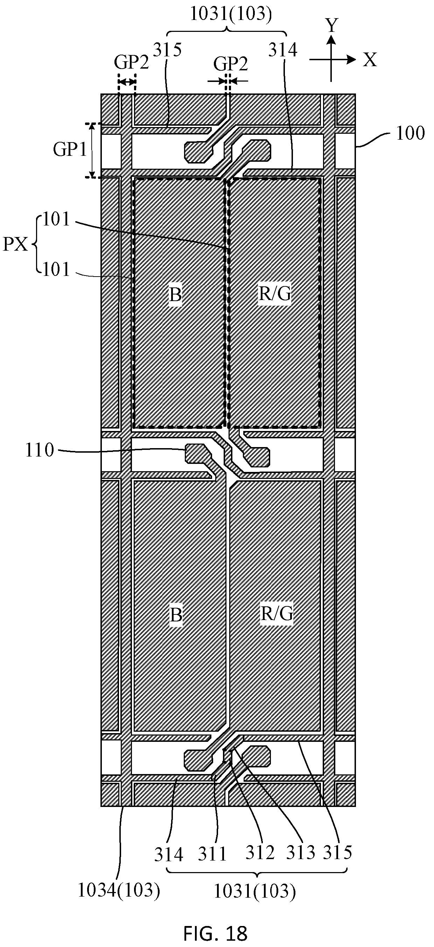

In some embodiments, as shown in FIG. 8 and FIG. 18, the second common electrode line 105 may further include a plurality of common electrode connection lines 1052. The plurality of common electrode connection lines 1052 are connected with adjacent common electrode repetition units 1051 arranged along the first direction X, so as to improve the uniformity of the common voltage signal. Optionally, the common electrode connection line 1052 may be connected to at least one of two ends and a middle of the common electrode repeat unit 1051 in the second direction Y. For example, in FIG. 8, the common electrode connection line 1052 is connected with the end of the common electrode repetition unit 1051 with a protrusion 511 in the second direction Y. In FIG. 18, the common electrode connection line 1052 is connected with the middle of the common electrode repeat unit 1051. Based on that the common electrode connection line 1052 shown in FIG. 8 is connected with the end of the common electrode repetition unit 1051, the common voltage signal can be transmitted directly between the adjacent common electrode repetition unit 1051 through the common electrode connection line 105; and based on that the common electrode connection line 1052 shown in FIG. 18 is connected with the middle of the common electrode repetition unit 1051, the common voltage signal may be transmitted to the adjacent common electrode repetition unit 1051 through the common electrode connection line 105, a part of the third common electrode sub-line 513 on the left side of the common electrode repetition unit 1051, the fourth common electrode sub-line 514, and the part of the third common electrode sub-line 513 on the right side of the common electrode repetition unit 1051, and the signal transmission path is longer, causing a certain voltage drop for the common voltage signal. Based on this, in some embodiments, the common electrode connection line 1052 is preferably arranged at the end of the common electrode repetition unit 1051.

In some embodiments, the array substrate provided in the embodiments of the disclosure, as shown in FIG. 14, FIG. 15 and FIG. 17, further includes a third common electrode line 112 extending along the first direction X in the first clearance GP1. The third common electrode line 112 is arranged in the same layer as the gate line 102, and the third common electrode line 112 is located between the two gate lines 102. An orthographic projection of the third common electrode line 112 on the base substrate 100 overlaps with the orthographic projection of a connection position (e.g., the first via h1) for the connection electrode 110 and the widened portion d 1 on the base substrate 100 on the base substrate 100. When the pixel electrode 101 is abnormally bright, the widened portion d1 and the third common electrode line 112 can be connected at the connection position for the connection electrode 110 and the widened portion d1 (for example, the first via h1), so that the pixel dark spot is realized. The via for conduction can be located in the orthographic projection of the gap between the two gate lines 20 on the base substrate 100. Since the first gap GP1 where the two gate lines 102 and the gap between the two gate lines 20 are located is usually arranged with black matrix, in the disclosure, the dark spot via can be hidden in the area where the light shielding layer is located, and the transmittance will not be affected.

In some embodiments, in the array substrates provided in the embodiments of the disclosure, as shown in FIG. 2, FIG. 6, FIG. 8, FIG. 13, FIG. 16 and FIG. 18, an orthographic projection of the data line 111 on the base substrate 100 is located in the orthographic projection of the second gap GP2 between adjacent pixel electrode groups PX on the base substrate 101. The first common electrode line 103 further includes a fourth common electrode sub-line 1034 extending along the second direction Y, and an orthographic projection of the fourth common electrode sub-line 1034 on the base substrate 100 at least partially covers the orthographic projection of the data line 111 on the base substrate 100, so as to use the fourth common electrode sub-line 1034 to shield the data signal of the data line 111 to the data signal of the adjacent pixel electrode 102 that is not connected with the data line.

It should be understood that the fourth common electrode sub-line 1034 causes the width of the second gap GP2 between the pixel electrode groups PX to be greater than or equal to the width of the second gap GP2 between the two pixel electrodes 101 in the pixel electrode group PX. Optionally, in order to increase transmittance, in the disclosure, the width of the second gap GP2 between the pixel electrode groups PX is greater than the width of the second gap GP2 between the two pixel electrodes 101 in the pixel electrode group PX.

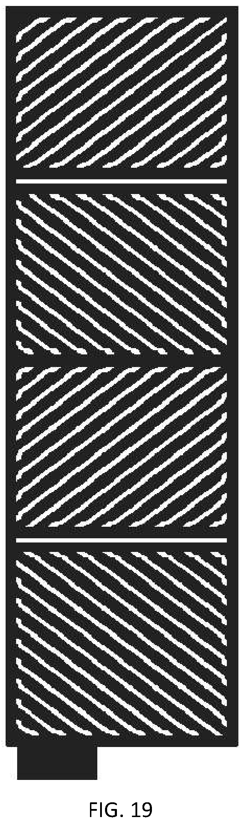

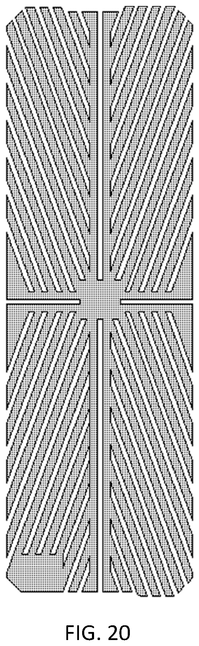

In some embodiments, in the array substrate provided in the embodiments of the disclosure, the pixel electrode 101 may be a plate-shaped electrode or a slit electrode. Optionally, the slit electrode may be the transverse-domain pixel electrode shown in FIG. 19, or the cross shaped pixel electrode shown in FIG. 20, or other shapes of slit electrodes known to those skilled in the art, which are not specifically limited in the disclosure.

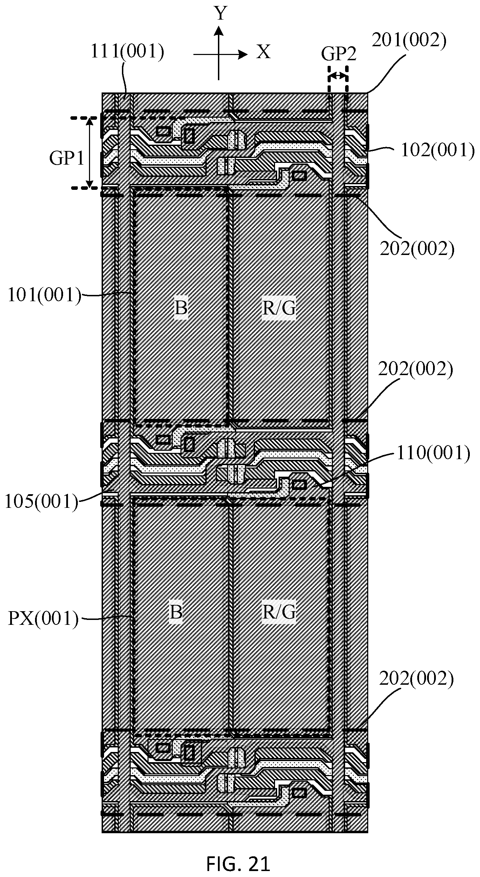

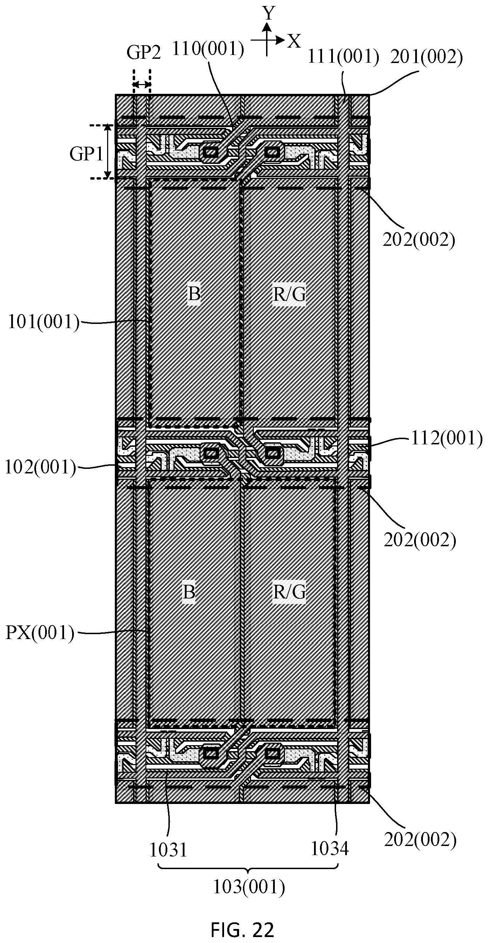

Based on the same invention conception, the embodiments of the disclosure provides a display panel, as shown in FIG. 21 and FIG. 22, including an array substrate 001 and an opposing substrate 002 arranged oppositely. The array substrate 001 is the array substrate 001 provided by the embodiments of the disclosure, and the opposing substrate 002 includes a black matrix 202 and a common electrode layer 201 on a side of the black matrix 202 facing the array substrate 001. Optionally, the common electrode layer 201 on the opposing substrate is disposed across the whole surface in the display area AA, and an orthographic projection of the black matrix 202 on the base substrate 100 overlaps with the orthographic projection of the first gaps GP1 on the base substrate 100, so that the gate lines 102, the first common electrode sub-lines 1031, the first extension portion s1032, and the second extension portions 1033 in the first gaps GP1 are hidden in the region of the black matrix 202, thus the black matrix 202 is used in the first gap GP1 for light shielding. Optionally, the orthographic projection of the black matrix 202 on the base substrate 100 and orthographic projections of regions, not overlapping with the first gaps GP1, of the second gaps GP2 on the base substrate 100 do not overlap with each other. The fourth common electrode sub-line 1034 can be used for light shielding in the regions of the second gaps GP2 that do not overlap with the first gaps GP1. Both the black matrix 202 and the fourth common electrode sub-line 1034 can be used for light shielding at the intersection region of the first gap GP1 and the second gap GP2. In some embodiments, the common electrode layer 201 may also be arranged on the array substrate 001, and no limitation is made herein. In the disclosure, the common electrode layer 201 is located on the opposite substrate 002 as an example.

In some embodiments, the display panel provided in the embodiments of the disclosure may be a curved-surface display panel. The display panel may also include a liquid crystal layer between the array substrate and the opposing substrate, a first polarizer on the side of the array substrate away from the opposing substrate, and a second polarizer on the side of the opposing substrate away from the array substrate, and the polarization direction of the first polarizer is perpendicular to the polarization direction of the second polarizer. The other necessary components of the display panel should be understood by those skilled in the art and shall not be repeated herein, nor shall they be used as a restriction on the disclosure.

Based on the same invention conception, the embodiments of the disclosure provide a display apparatus, including the display panel provided in the embodiments of the disclosure and a backlight module on a light incident side of the display panel. The backlight module can be a direct backlight module or a side-entry backlight module. Optionally, the side-entry backlight module can include a light bar, a reflector, a light guide plate, a diffuser sheet, a prism group, etc. arranged in a stack, with the light bar on a side of the light guide plate in the thickness direction. The direct backlight module may include a matrix light source, a reflector, a diffusion plate and a brightness enhancement film, etc. stacked on the light emitting side of the matrix light source, and the reflector includes openings that are directly facing to the positions of the respective lamp beads in the matrix light source. The lamp beads in the light bar and the lamp beads in the matrix light source can be light-emitting diodes (LEDs), such as miniature light-emitting diodes (Mini LEDs, Micro LEDs, etc.).

Micro light-emitting diodes (LEDs) in the sub-millimeter or even micron order are self-emitting devices like organic light-emitting diodes (OLEDs). Like organic light-emitting diodes, it has a series of advantages such as high brightness, ultra-low latency, and ultra-large viewing angle. In addition, because inorganic light-emitting diodes emit light based on metal semiconductors with more stable properties and lower resistance, it has the advantages of lower power consumption, higher temperature and low temperature resistance, and longer service life than organic light-emitting diodes that emit light based on organic matter. In addition, when the micro light-emitting diode is used as the backlight, it can achieve a more precise dynamic backlight effect, which can effectively improve the brightness and contrast of the screen, and also solve the glare phenomenon caused by the traditional dynamic backlight between the bright and dark areas of the screen, and optimize the visual experience.

In some embodiments, the display apparatuses provided in the embodiments of the disclosure may be: projectors, 3D printers, virtual reality devices, mobile phones, tablet computers, televisions, monitors, notebook computers, digital photo frames, navigators, smart watches, fitness wristbands, personal digital assistants, and any other products or parts with display functions. Optionally, the display apparatuses provided in the embodiments of the disclosure include, but are not limited to: radio frequency units, network modules, audio output and input units, sensors, display units, user input units, interface units, control chips and other components. Optionally, the control chip is a central processing unit, a digital signal processor, a system-on-chip (SoC), etc. For example, the control chip can also include memory, can also include power module, etc., and realize power supply and signal input and output functions through separately arranged wires, signal lines, etc. For example, a control chip can also include hardware circuitry as well as executable code for a computer. Hardware circuitry can include conventional VLSI circuits or gate arrays, as well as existing semiconductors such as logic chips, transistors, or other discrete components. Hardware circuits can also include field-programmable gate arrays, programmable array logic, programmable logic devices, and so on. In addition, those skilled in the art can understand that the above structure does not constitute a limitation on the display apparatus provided in the embodiments of the disclosure, in other words, the display apparatuses provided in the embodiments of the disclosure may include more or fewer of the above-mentioned components, or combine certain components, or arrange different components.

Although the preferred embodiments of the invention have been described, those skilled in the art, upon learning the basic inventive concepts, can make further modifications and variations to these embodiments. Therefore, the appended claims are intended to be interpreted to include the preferred embodiments and all modifications and changes falling within the scope of the invention.

Apparently, those skilled in the art may make various modifications and variations to the disclosure without departing from the spirit and scope of the disclosure. Thus, if these modifications and variations fall within the scope of the claims and their equivalents, the disclosure is intended to include these modifications and variations.

## Claims

1. An array substrate comprising:
a base substrate;
a plurality of pixel electrodes arranged in an array on the base substrate, the plurality of pixel electrodes having first gaps extending along a first direction and second gaps extending along a second direction, every two pixel electrodes arranged in the first direction forming a pixel electrode group, and the second direction intersecting with the first direction;
a plurality of gate lines extending along the first direction and arranged along the second direction on the base substrate, orthographic projections of the plurality of gate lines on the base substrate at least partially overlapping with orthographic projections of the first gaps on the base substrate, and two gate lines being provided in a same one first gap; and
a first common electrode line, an orthographic projection of the first common electrode line on the base substrate being located in the orthographic projections of the first gaps and in orthographic projections of second gaps between pixel electrode groups on the base substrate;
wherein in a region, not overlapping with the second gap, of the first gap, the orthographic projection of the first common electrode line on the base substrate passing through, along the second direction, an orthographic projection of a gap between two gate lines on the base substrate.

2. The array substrate according to claim 1, wherein the first common electrode line comprises a plurality of first common electrode sub-lines in the first gaps, and at least a part of an orthographic projection of the first common electrode sub-line on the base substrate passes through, along the second direction, the orthographic projection of the gap between the two gate lines on the base substrate.

3. The array substrate according to claim 2, further comprising a color filter layer between a layer where the plurality of gate lines are located and a layer where the plurality of pixel electrodes are located; wherein
the color filter layer comprises an opening in the first gap;
the first common electrode line further comprises a first extension portion adjacent to the pixel electrode and connected with the first common electrode sub-line in the first gap, the first extension portion has a first boundary adjacent to the pixel electrode and extending along the first direction, and an orthotropic portion of the first boundary on the base substrate is located in an orthographic projection of the opening on the base substrate;
the pixel electrode has a second boundary adjacent to the first extension portion and extending along the first direction, and an orthotropic projection of the second boundary on the base substrate is located outside the orthographic projection of the opening on the base substrate.

4. The array substrate according to claim 3, wherein the opening has a fourth boundary between the first boundary and the second boundary;
a distance, in the second direction, between the first boundary and the fourth boundary is greater than or equal to 4 µm; and
a distance, in the second direction, between the second boundary and the fourth boundary is greater than or equal to 4 µm.

5. The array substrate according to claim 3, further comprising:
a second common electrode line; and
a first insulating layer between a layer where the second common electrode line is located and the layer where the plurality of pixel electrodes are located;
wherein the first insulating layer comprises the color filter layer, and the second common electrode line comprises a plurality of common electrode repetition units;
the common electrode repetition unit comprises a protrusion, the protrusion is electrically connected with the first extension portion through a first via running through the first insulating layer, and an orthographic projection of the first via on the base substrate is located in the orthographic projection of the opening on the base substrate.

6. The array substrate according to claim 5, wherein the gate line comprises a bypass portion;
the bypass portion is spaced apart from the protrusion, and the protrusion has a third boundary facing the bypass portion;
wherein a routing mode of the bypass portion is the same as a routing mode of the third boundary.

7. The array substrate according to claim 5 or 6, wherein a part of an orthographic projection the first via on the base substrate is located in an orthotropic portion of the protrusion on the base substrate, and a remaining part of the orthotropic projection of the first via on the base substrate is located at a side of the orthographic projection of the protrusion on the base substrate facing the orthographic projection of the gate line on the base substrate.

8. The array substrate according to any one of claims 5-7, further comprising: a plurality of transistors, and a second insulating layer between a layer where the plurality of transistors are located and the layer where the plurality of pixel electrodes are located; wherein
the second insulating layer comprises the color filter layer, and the first insulating layer comprises the second insulating layer;
a first electrode of the transistor is electrically connected with the pixel electrode through a second via running through the second insulating layer, and an orthographic projection of the second via on the base substrate is located in the orthographic projection of the opening on the base substrate;
orthographic projections of at least some of second vias and at least some of first vias on the base substrate are located in an orthographic projection of a same opening on the base substrate.

9. The array substrate according to claim 8, wherein the first electrode of the transistor comprises a widened portion extending along the first direction;
the widened portion is electrically connected with the pixel electrode through the second via, and an orthotropic projection of the widened portion on the base substrate is located at a side of the orthotropic projection of the two gate lines on the base substrate facing the pixel electrode on the base substrate.

10. The array substrate according to claim 9, further comprising a plurality of connection electrodes;
wherein the connection electrode is integrally arranged with the pixel electrode in the first gap, the connection electrode is electrically connected with the widened portion through the second via, and an orthographic projection of the connection electrode on the base substrate overlaps at least partially with the orthotropic projection of the widened portion on the base substrate.

11. The array substrate according to claim 10, wherein two connection electrodes connected with a same pixel electrode group are respectively located in first gaps at both sides along the second direction of the same pixel electrode group; and
two connection electrodes in a same first gap are alternate in the second direction.

12. The array substrate according to claim 11, wherein in a first gap between two adjacent pixel electrode groups arranged in the second direction, two adjacent transistors are symmetrically arranged with respect to a center of the first gap between the two adjacent pixel electrode groups arranged in the second direction, and at least part of the transistors overlap with a region, extending along the second direction and located between two pixel electrodes in one of the pixel electrode groups, of the first gap.

13. The array substrate according to any one of claims 8-12, wherein a second electrode of the transistor comprises a connection portion extending in the first direction, at least a part of an orthographic projection of the connection portion on the base substrate overlaps with the orthographic projection of the gap between the two gate lines on the base substrate, and a routing mode of the connection portion is the same as a routing mode of the third boundary of the protrusion facing the gate line.

14. The array substrate according to any one of claims 8-13, wherein the base substrate comprises a plurality of red sub-pixel regions, a plurality of green sub-pixel regions and a plurality of blue sub-pixel regions, and the plurality of pixel electrodes are located in the plurality of red sub-pixel regions, the plurality of green sub-pixel regions and the plurality of blue sub-pixel regions;
an orthotropic projection of a second via corresponding to a pixel electrode in the blue sub-pixel region on the base substrate and the orthotropic projection of the first via on the base substrate are located in the orthographic projection of the same opening on the base substrate.

15. The array substrate according to any one of claims 8-14, wherein the first common electrode sub-line comprises a first portion, a second portion and a third portion connected in sequence;
the first portion extends along the second direction, and an orthographic projection of the first portion on the base substrate overlaps at least partially with an orthographic projection of one of the gate lines on the base substrate;
the second portion extends along the first direction, and at least a part of an orthographic projection of the second portion on the base substrate overlaps with the orthographic projection of the gap between the two gate lines on the base substrate;
the third portion extends along the second direction, and an orthographic projection of the third portion on the base substrate overlaps at least partially with an orthotropic projection of another one of the gate lines on the base substrate; and
the orthographic projection of the first portion on the base substrate and the orthographic projection of the third portion on the base substrate are located respectively at two sides of orthographic projections of gates of the two transistors on the base substrate.

16. The array substrate according to claim 15, wherein the first extension portion is connected with the third portion, and an orthographic projection of the first extension portion on the base substrate covers an orthographic projection of a part of an edge of the gate line facing the pixel electrode on the base substrate.

17. The array substrate according to claim 16, wherein the first common electrode line further comprises a second extension portion connected with the first portion, and an orthotropic projection of the second extension portion on the base substrate covers an orthographic projection of a part of an edge of the gate line facing the pixel electrode on the base substrate.

18. The array substrate according to claim 2, further comprising a plurality of transistors;
wherein
a first electrode of the transistor comprises a widened portion extending along the first direction, the widened portion is electrically connected with the pixel electrode, and an orthotropic portion of the widened portion on the base substrate is located in the orthographic projection of the gap between the two gate lines on the base substrate;
some of orthographic projections of a part of the first common electrode sub-lines on the base substrate are located between orthographic projections of the widened portions of two transistors on the base substrate.

19. The array substrate according to claim 18, further comprising a plurality of connection electrodes;
wherein
the connection electrode is integrally arranged with the pixel electrode, the connection electrode is electrically connected with the widened portion, and an orthographic projection of the connection electrode on the base substrate passes across an orthographic projection of one of the two gate lines on the base substrate and extends to the orthographic projection of the gap between the two gate lines on the base substrate;
orthographic projections of a remaining part of the first common electrode sub-lines on the base substrate are disconnected at the connection electrode.

20. The array substrate according to claim 19, further comprising a third common electrode line extending along the first direction in the first gap;
wherein the third common electrode line is arranged in the same layer as the gate line, the third common electrode line is located between the two gate lines, and an orthographic projection of the third common electrode line on the base substrate overlaps with an orthographic projection of a connection position for the connection electrode and the widened portion on the base substrate.

21. The array substrate according to claim 19 or 20, wherein some of the first common electrode sub-lines each comprise a first portion, a second portion and a third portion connected in sequence;
an orthographic projection of the first portion on the base substrate overlaps at least partially with the orthographic projection of one of the gate lines on the base substrate, and the orthotropic projection of the first portion on the base substrate is parallel to a part of an orthotropic projection of one of connection electrodes on the base substrate;
the second portion extends along the second direction, and an orthographic projection of the second portion on the base substrate is located between the orthographic projections of the widened portions of the two transistors on the base substrate;
an orthographic projection of the third portion on the base substrate overlaps at least partially with an orthographic projection of another one of the gate lines on the base substrate, and the orthographic projection of the third portion on the base substrate is parallel to a part of an orthotropic projection of another one of connection electrodes on the base substrate; and
the orthotropic projection of the first portion on the base substrate and the orthographic projection of the third portion on the base substrate are located between orthographic projections of two connection electrodes on the base substrate.

22. The array substrate according to any one of claims 2-21, wherein the first common electrode sub-line comprises a fourth portion and a fifth portion;
an orthographic projection of the fourth portion on the base substrate covers a part of an orthotropic projection of an edge of one of the gate lines facing the pixel electrode on the base substrate, and an orthotropic projection of the fifth portion on the base substrate covers a part of an orthotropic projection of an edge of another one of the gate lines facing the pixel electrode on the base substrate.

23. The array substrate according to any one of claims 1-22, further comprising a second common electrode line in the same layer as the plurality of gate lines;
wherein
the second common electrode line comprises a plurality of common electrode repetition units;
the common electrode repetition unit comprises a second common electrode sub-line extending in the second direction, and an orthographic projection of the second common electrode sub-line on the base substrate covers orthotropic projections of adjacent edges of two pixel electrodes in the pixel electrode group on the base substrate; and
a line width of the second common electrode sub-line in the first direction is greater than or equal to 7 µm and less than or equal to 15 µm.

24. The array substrate according to claim 23, wherein the common electrode repetition unit further comprises third common electrode sub-lines extending in the second direction;
orthographic projection of the third common electrode sub-lines on the base substrate cover orthotropic projection of edges of the two pixel electrodes in the pixel electrode group which are away from each other on the base substrate;
a size of the third common electrode sub-line in the second direction is less than or equal to a size of the second common electrode sub-line in the second direction.

25. The array substrate according to claim 23, wherein the gate line comprises, at a position adjacent to the second common electrode sub-line, a polygonal portion protruding away from the second common electrode sub-line or a straight portion extending along the first direction.

26. The array substrate according to any one of claims 23-25, wherein the second common electrode lines further comprises a plurality of common electrode connection lines, and the plurality of common electrode connection lines are connected with adjacent common electrode repetition units arranged along the first direction.

27. The array substrate according to claim 26, wherein the common electrode connection line is connected with at least one of two ends and a middle of the common electrode repetition unit in the second direction.

28. The array substrate according to any one of claims 1-27, further comprising a plurality of data lines extending in the second direction and arranged along the first direction; wherein
an orthographic projection of the data line on the base substrate is located in an orthographic projection of a second gap between adjacent pixel electrode groups on the base substrate;
the first common electrode line further comprises a fourth common electrode sub-line extending along the second direction, and an orthographic projection of the fourth common electrode sub-line on the base substrate at least partially covers the orthographic projection of the data line on the base substrate.

29. The array substrate according to any one of claims 1-28, wherein the pixel electrode is a plate-shaped electrode or a slit electrode.

30. A display panel, comprising:
an array substrate according to any one of claims 1-29; and
an opposing substrate.

31. The display panel according to claim 30, wherein the opposing substrate comprises a common electrode layer.

32. The display panel according to claim 30 or 31, wherein the opposing substrate further comprises a black matrix, wherein the common electrode layer is located on a side of the black matrix facing the array substrate;
an orthographic projection of the black matrix on the base substrate overlaps with the orthographic projections of the first gaps on the base substrate, and the orthographic projection of the black matrix on the base substrate and orthographic projections of regions, not overlapping with the first gaps, of the second gaps on the base substrate do not overlap with each other.

33. A display apparatus, comprising the display panel according to any one of claims 30-32.
